# EUROPEAN PATENT APPLICATION

(11) **EP 4 535 888 A1**
(43) Date of publication of application: **09.04.2025**
(21) Application number: 22943082.2
(22) Date of filing: 24.05.2022
(51) Int. Cl.: H04W 72/04, H04W 74/08

(54) **BEAM DETERMINATION METHOD AND APPARATUS**

(71) Applicant: Beijing Xiaomi Mobile Software Co., Ltd., Beijing 100085 (CN)
(72) Inventor: QIAO, Xuemei, Beijing 100085 (CN)
(74) Representative: Dehns Germany Partnerschaft mbB
(86) International application number: PCT/CN2022/094804
(87) International publication number: WO 2023/225876

(57) **Abstract**

Embodiments of the present disclosure disclose a beam determination method and apparatus, which can be applied to the technical field of communications. The method performed by a network side device comprises: in a small data transmission (SDT) process, the network side device determines the latest uplink transmission transmitted by a terminal device relative to a downlink channel, and determines, according to a synchronization signal block (SSB) associated with the latest uplink transmission, a beam used for downlink channel transmission of the terminal device. Therefore, a beam used for downlink channel transmission can be determined, so that a downlink channel can use a suitable beam for transmission, thus improving the reliability of downlink channel transmission.

## Description

### TECHNICAL FIELD

The disclosure relates to a field of communication technology, in particular to a beam determination method and a device.

### BACKGROUND

In the related art, it is proposed to support small data transmission (SDT) in an inactive state, which represents that data transmission can be completed without entering into a connected state, thus avoiding waste of time-frequency resources, shortening a data transmission delay and saving terminal energy consumption.

The SDT supports SDT based on a random access channel and SDT based on a semi-persistent configuration. The SDT based on the random access channel is further classified into two types, namely, SDT based on a 2-step random access channel (2-step RACH) and SDT based on a 4-step random access channel (4-step RACH).

### SUMMARY

Embodiments of the disclosure provide a beam determination method and a device, capable of determining a beam used for downlink channel transmission, such that a downlink channel can use a suitable beam for transmission, reliability of the downlink channel transmission may be improved.

According to a first aspect of embodiments of the disclosure, a beam determination method is provided. The method is performed by a network side device and includes: in a transmission process of small data transmission (SDT), determining latest uplink transmission of a terminal device relative to downlink channel transmission; and determining a beam used for the downlink channel transmission of the terminal device according to a synchronization signal block (SSB) associated with the latest uplink transmission.

In this technical solution, the network side device determines the latest uplink transmission of the terminal device relative to the downlink channel transmission in the transmission process of SDT, and determines the beam used for the downlink channel transmission of the terminal device according to the SSB associated with the latest uplink transmission. In this way, the beam used for the downlink channel transmission is determined, such that a downlink channel can use a suitable beam for transmission, reliability of the downlink channel transmission may be improved.

According to a second aspect of embodiments of the disclosure, another beam determination method is provided. The method is performed by a terminal device and includes: in a transmission process of SDT, determining latest uplink transmission relative to downlink channel transmission; and determining a beam used for the downlink channel transmission of the terminal device according to an SSB associated with the latest uplink transmission.

According to a third aspect of embodiments of the disclosure, a communication device is provided. The communication device has the ability to implement part or all of the functions of the network side device in the method described in the first aspect. For example, the communication device may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above method. The transceiver module is configured to support communication between the communication device and other devices. The communication device may further include a storage module coupled to the transceiver module and the processing module, which is configured to store necessary computer programs and data for the communication device.

In an implementation, the communication device includes a processing module. The processing module is configured to, in a transmission process of SDT, determine latest uplink transmission of a terminal device relative to downlink channel transmission. The processing module is further configured to determine a beam used for the downlink channel transmission of the terminal device according to an SSB associated with the latest uplink transmission.

According to a fourth aspect of embodiments of the disclosure, another communication device is provided. The communication device has the ability to implement part or all of the functions of the terminal device in the method described in the second aspect. For example, the communication device may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above method. The transceiver module is configured to support communication between the communication device and other devices. The communication device may further include a storage module coupled to the transceiver module and the processing module, which is configured to store necessary computer programs and data for the communication device.

In an implementation, the communication device includes a processing module. The processing module is configured to, in a transmission process of SDT, determine latest uplink transmission relative to downlink channel transmission. The processing module is further configured to determine a beam used for the downlink channel transmission of the terminal device according to an SSB associated with the latest uplink transmission.

According to a fifth aspect of embodiments of the disclosure, a communication device is provided. The communication device includes: a processor. When the processor calls computer programs stored in a memory, the method described in the first aspect above is implemented.

According to a sixth aspect of embodiments of the disclosure, a communication device is provided. The communication device includes: a processor. When the processor calls computer programs stored in a memory, the method described in the second aspect above is implemented.

According to a seventh aspect of embodiments of the disclosure, a communication device is provided. The communication device includes: a processor and a memory having computer programs stored thereon. When the processor executes the computer programs stored in the memory, the communication device is caused to implement the method described in the first aspect above.

According to an eighth aspect of embodiments of the disclosure, a communication device is provided. The communication device includes: a processor and a memory having computer programs stored thereon. When the processor executes the computer programs stored in the memory, the communication device is caused to implement the method described in the second aspect above.

According to a ninth aspect of embodiments of the disclosure, a communication device is provided. The communication device includes: a processor and an interface circuit. The interface circuit is configured to receive code instructions and transmit the code instructions to the processor. The processor is configured to run the code instructions to perform the method described in the first aspect above.

According to a tenth aspect of embodiments of the disclosure, a communication device is provided. The communication device includes: a processor and an interface circuit. The interface circuit is configured to receive code instructions and transmit the code instructions to the processor. The processor is configured to run the code instructions to cause the communication device to perform the method described in the second aspect above.

According to an eleventh aspect of embodiments of the disclosure, a beam determination system is provided. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium is provided. The computer-readable storage medium is configured to store instructions used by the above network side device. When the instructions are executed, the network side device is caused to implement the method of the first aspect.

According to a thirteenth aspect of embodiments of the disclosure, a readable storage medium is provided. The readable storage medium is configured to store instructions used by the above terminal device. When the instructions are executed, the terminal device is caused to implement the method of the second aspect.

According to a fourteenth aspect of embodiments of the disclosure, a computer program product including computer programs is provided. When the computer programs are run by a computer, the computer is caused to implement the method of the first aspect.

According to a fifteenth aspect of embodiments of the disclosure, a computer program product including computer programs is provided. When the computer programs are run by a computer, the computer is caused to implement the method of the second aspect.

According to a sixteenth aspect of embodiments of the disclosure, a chip system is provided. The chip system includes at least one processor and an interface for supporting the network side device in realizing the functions involved in the first aspect, e.g., determining or processing at least one of data or information involved in the method described above. In a possible design, the chip system further includes a memory. The memory is configured to store necessary computer programs and data of the network side device. The chip system may consist of chips or may include a chip and other discrete devices.

According to a seventeenth aspect of embodiments of the disclosure, a chip system is provided. The chip system includes at least one processor and an interface for supporting the terminal device in realizing the functions involved in the second aspect, e.g., determining or processing at least one of data or information involved in the method described above. In a possible design, the chip system further includes a memory. The memory is configured to store necessary computer programs and data of the terminal device. The chip system may consist of chips or may include a chip and other discrete devices.

According to an eighteenth aspect of embodiments of the disclosure, a computer program is provided. When the computer program is run by a computer, the computer is caused to implement the method of the first aspect.

According to a nineteenth aspect of embodiments of the disclosure, a computer program is provided. When the computer program is run by a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments of the disclosure or the background technologies is given below.
FIG. 1 is a structural diagram of a communication system provided by an embodiment of the disclosure.
FIG. 2 is a flowchart of a beam determination method provided by an embodiment of the disclosure.
FIG. 3 is a flowchart of another beam determination method provided by an embodiment of the disclosure.
FIG. 4 is a flowchart of yet another beam determination method provided by an embodiment of the disclosure.
FIG. 5 is a flowchart of yet another beam determination method provided by an embodiment of the disclosure.
FIG. 6 is a flowchart of yet another beam determination method provided by an embodiment of the disclosure.
FIG. 7 is a flowchart of yet another beam determination method provided by an embodiment of the disclosure.
FIG. 8 is a flowchart of yet another beam determination method provided by an embodiment of the disclosure.
FIG. 9 is a flowchart of yet another beam determination method provided by an embodiment of the disclosure.
FIG. 10 is a flowchart of yet another beam determination method provided by an embodiment of the disclosure.
FIG. 11 is a flowchart of yet another beam determination method provided by an embodiment of the disclosure.
FIG. 12 is a flowchart of yet another beam determination method provided by an embodiment of the disclosure.
FIG. 13 is a structural diagram of a communication device provided by an embodiment of the disclosure.
FIG. 14 is a structural diagram of another communication device provided by an embodiment of the disclosure.
FIG. 15 is a structural diagram of a chip provided by an embodiment of the disclosure.

### DETAILED DESCRIPTION

To facilitate understanding the disclosure, some concepts involved in the embodiments of the disclosure are briefly introduced here.
1. Beam. The beam may refer to a wide beam, a narrow beam, or other types of beams. The technology for forming the beam may be beamforming or other technical means. The beamforming includes digital beamforming, analog beamforming, and hybrid-digital/analog beamforming. Different beams can be used to send the same information or different pieces of information. Optionally, a plurality of beams with the same or similar communication characteristics may be regarded as one beam. There may include one or more antenna ports, within one beam, for transmission of data channels, control channels, and sounding signals, etc. For example, a transmitting beam may refer to a distribution of signal strength in different directions in space of a signal transmitted by an antenna, and a receiving beam may refer to a distribution of signal strength in different directions in space of a radio signal received from the antenna. It is understood that one or more antenna ports for forming one beam may be regarded as one antenna port set. The beam may also be reflected by a spatial filter.
2. Quasi co-located (QCL). A QCL relationship is used to indicate that a plurality of resources share one or more identical or similar communication characteristics. For example, if two antenna ports have the QCL relationship, a large-scale channel characteristic of transmitting one signal by one port can be inferred from a large-scale channel characteristic of transmitting one signal by the other port. Signals corresponding to antenna ports having the QCL relationship may have the same parameters, or a parameter of one antenna port can be used to determine a parameter of another antenna port having the QCL relationship with this antenna port, or two antenna ports have the same parameter, or a difference in parameters between the two antenna ports is less than a certain threshold. The parameters may include one or more of following large-scale channel parameters: a delay spread, a Doppler spread, a Doppler shift, an average delay, an average gain, and a spatial Rx parameter. The spatial Rx parameter may include one or more of: an angle of arrival (AOA), a dominant AoA, an average AoA, an angle of departure (AOD), a channel correlation matrix, a power angle spread spectrum of AoA, an average AoD, a power angle spread spectrum of AoD, a transmitting channel correlation, a receiving channel correlation, a transmitting beam forming, a receiving beam forming, a spatial channel correlation, a spatial filter, or a spatial filter parameter, or a spatial receiving parameter, etc.
3. Synchronization signal block (SSB). The SSB may also be referred to as synchronization signal (SS)/physical broadcast channel (PBCH) block (SS/PBCH block). The SS/PBCH block includes at least one of: a primary synchronization signal (PSS), a secondary synchronization signal (SSS), a physical broadcast channel (PBCH), or a demodulationed reference signal (DMRS). The SS/PBCH block may also be called as SSB/PBCH block, and signals in the SS/PBCH block or the SSB/PBCH block may correspond to the same antenna port. Before sending a random access preamble, under 5G beamforming, the terminal device may first detect and select one beam for random access. Through a high-level parameter ssb-perRACH-OccasionAndCB-PremblesPreSS, the terminal device can be provided with N synchronization signal and PBCH blocks (SSBs) associated with physical random access channel (PARCH) transmitting occasions and a number of R contention-based PARCH preambles for each SSB. If N is less than 1, the SSB is mapped to 1/N consecutive PRACH transmitting occasions. If N is greater than 1, R contention-based random access preambles with consecutive indexes (starting from an index) are associated with SSBn. The number of random access preambles for random access at this random access occasion is configured by a higher-layer parameter totalNumberOfRA-Preambles.
4. Random Access (RA)

The RA process refers to a process from a time when a user sends a random access preamble to try to access the network to a time when a basic signaling connection is established with the network. The RA is a very critical step in a mobile communication system and is also the last step in establishing a communication link between a terminal device and the network. The terminal device can exchange information with a network side device through RA. The RA process may include 2-step random access and 4-step random access.

In the 4-step RA process, the terminal device sends the random access preamble via a first message (msg1) to the network side device, the network side device sends a random access response (RAR) via a second message (msg2), and the terminal device sends a radio resource control (RRC) connection request through a third message (msg3) and the terminal device receives a RRC connection setup message through a fourth message (msg4) (this process is a contention resolution process).

In the 2-step RA process, the terminal device sends a message A (msgA) to the network side device, and the network side device sends a message B (msgB) to the terminal device. The msgA includes contents equivalent to the msg1 and the msg3 in the 4-step RA process, and the msgB includes contents equivalent to the msg2 and the msg4 in the 4-step RA process.

### Msg3

The third message in the 4-step RA process is called as Msg3. The contents of the Msg3 may be different depending on different states of the terminal device and different application scenarios. The Msg3 needs to contain an important information, namely a unique identifier of each terminal device. The identifier is used for the contention resolution process in the fourth step in the 4-step RA process.

### 5. Small data transmission (SDT)

SDT supports two types, namely, SDT based on a RA process and SDT based on semi-persistent. In the SDT based on the RA process, the terminal performs uplink small data transmission on a physical uplink shared channel (PUSCH) of an msgA or an msg3 through 2-step RA or 4-step RA. In the SDT based on the semi-persistent, when the network side device switches to an inactive state from a connected state, an RRC release (RRCrelease) message carries information such as semi-persistent time-frequency domain resource allocation information required for SDT and timing advance (TA) validity judgment. If uplink data is to be transmitted in an inactive state, the terminal first confirms the TA validity, a synchronization signal reference signal received power (SS-RSRP) and a size of data. When all conditions such as the TA validity, the SS-RSRP and the size of data are met, small data transmission can be performed using semi-persistent resources configured by the network side device. Otherwise, for example, if the size of uplink data to be transmitted by the terminal exceeds a threshold, the terminal executes the 4-step RA process and enters into the connected state, to perform data transmission in the connected state.

### 6. Scrambling

Scrambling is a method for processing digital signals. A scrambling code is XORed with an original signal to obtain a new signal. Generally, physical channels of uplinks are scrambled to distinguish different terminal devices, and downlinks are scrambled to distinguish cells and channels. A scrambling code can be used to scramble and descramble the original signal. For example, the scrambling code may be used to scramble downlink control information (DCI), or scramble a PDCCH. Scrambling the DCI may specifically refer to scrambling a cyclic redundancy check (CRC) field of the DCI. Correspondingly, the terminal device descrambles received DCI, i.e., the terminal device descrambles the CRC field of the DCI using a corresponding type of scrambling code, to determine a format or a type of the DCI.

The scrambling code may include, but is not limited to, a cell radio network temporary identifier (C-RNTI), a temporary cell radio network temporary identifier (TC-RNTI), a random access radio network temporary identifier (RA-RNTI), a system information radio network temporary identifier (SI-RNTI) and a paging radio network temporary identifier (P-RNTI).

### a) C-RNTI and TC-RNTI

If the terminal device is in a RRC-connected (radio resource control connected) state, it represents that the terminal device has been assigned with the C-RNTI, when initiating a RA request to the network side device, the terminal device needs to carry the C-RNTI in the request. If the terminal device is in a RRC idle state or an RRC inactive state, it represents that the terminal device has not been assigned with the C-RNTI, when the terminal device requests an RRC connection, the network side device may allocate a temporary C-RNTI to the terminal device in a subsequent response message, which is noted as TC-RNTI. If the RA process of the terminal device is successful, the TC-RNTI can be converted into the C-RNTI.

### b)RA-RNTI

In the RA process, generation of the RA-RNTI is related to the time-frequency resources used by the terminal device to send the preamble. For example, when a terminal device A and a terminal device B both initiate the RA using the same RA channel time-frequency resource, the corresponding RA-RNTIs are the same.

### 7. Search space (SS)

In a 5G NR system, due to a large bandwidth of the system and a difference in terminal demodulation capabilities, in order to improve a resource utilization rate and reduce complexity of blind decoding (BD), the PDCCH does not occupy the entire bandwidth in a frequency domain. In order to increase system flexibility and adapt to different scenarios, a starting location in a time domain of the PDCCH can be configured. Therefore, in 5G NR, the terminal device needs to fully obtain the time-frequency domain resource configuration information of the PDCCH before it can further demodulate the PDCCH. In the related art, information such as the frequency-domain resource information of the PDCCH and the number of orthogonal frequency division multiplexing (OFDM) symbols occupied in the time domain is encapsulated in a control resource set (CORESET), and information such as a starting OFDM symbol of the PDCCH, a monitoring period and an associated CORESET is encapsulated in the SS.

The SS is divided into two types, i.e., common search space (CSS) and UE specific search space (USS). The CSS is mainly used during accessing and cell switching, while the USS is used after accessing.

In order to better understand a beam determination method and a device disclosed in embodiments of the disclosure, a communication system to which the embodiments of the disclosure are applicable is described below at first.

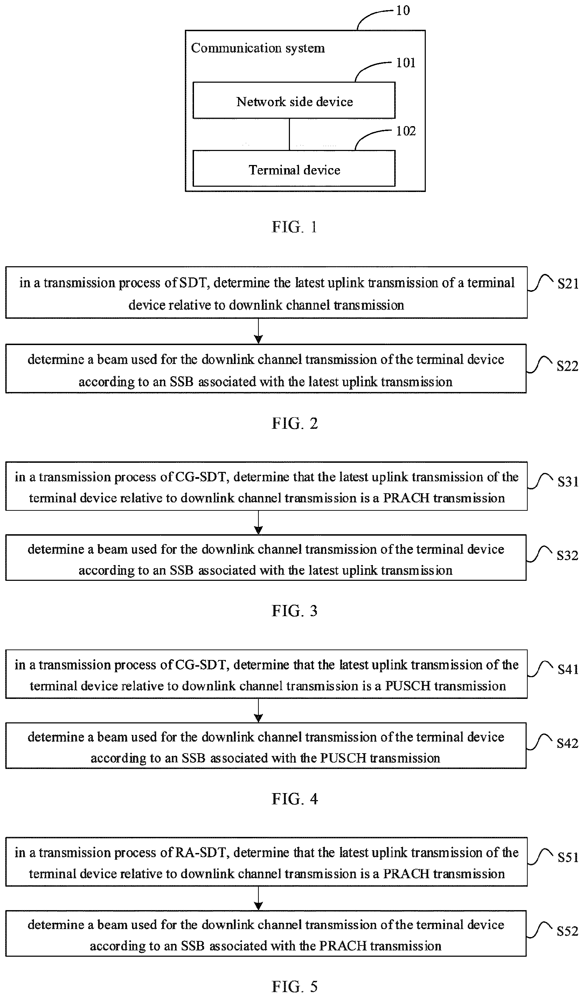

FIG. 1 is a structural diagram of a communication system provided by an embodiment of the disclosure. The communication system may include, but is not limited to, a network side device and a terminal device. The number and the form of devices illustrated in FIG. 1 are only for examples and do not constitute a limitation on the embodiments of the disclosure, and two or more network side devices and two or more terminal devices may be included in practical applications. The communication system 10 illustrated in FIG. 1 includes, for example, a network side device 101 and a terminal device 102.

It is noteworthy that the technical solutions of the embodiments of the disclosure can be applied to various communication systems, such as, a long term evolution (LTE) system, a 5th generation (5G) mobile communication system, a 5G NR system, or other future new mobile communication systems. It should also be noted that the sidelink in the embodiment of the disclosure may also be called a side link or a direct link.

The network side device 101 in the embodiments of the disclosure is an entity on a network side for transmitting or receiving signals. For example, the network side device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network side device are not limited in the embodiments of the disclosure. The network side device according to the embodiments of the disclosure may be composed of a central unit (CU) and a distributed unit (DU). The CU may also be referred to as a control unit. The use of CU-DU structure allows to divide a protocol layer of the network side device, such as a base station, such that some of the protocol layer functions are placed in the CU for centralized control, and some or all of the remaining protocol layer functions are distributed in the DU, and the DU is centrally controlled by the CU.

The terminal device 102 in the embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

A beam determination method and a device will be introduced in detail below with reference to the accompanying drawings.

Please refer to FIG. 2, FIG. 2 is a flowchart of a beam determination method provided by an embodiment of the disclosure.

As illustrated in FIG. 2, the method is performed by a network side device. The method may include, but is not limited to, the following steps.

At step S21, in a transmission process of SDT, latest uplink transmission of a terminal device relative to downlink channel transmission is determined.

In an embodiment of the disclosure, the network side device determines the latest uplink transmission of the terminal device relative to the downlink channel transmission in the transmission process of SDT. In the transmission process of SDT, the terminal device may perform one or more uplink transmissions, and determine the latest uplink transmission relative to the downlink channel transmission. If the terminal device performs one uplink transmission, this transmission can be determined as the first uplink transmission of the terminal device. If the terminal device performs multiple uplink transmissions, the latest uplink transmission of the terminal device relative to the downlink channel transmission is determined.

It is understood that the SDT may be SDT based on a RA process or SDT based on a semi-persistent configuration. The SDT based on the RA process is also called as RA-SDT (random access-SDT), and the SDT based on the semi-persistent configuration is also called as configured grant-SDT (CG-SDT).

In an embodiment of the disclosure, the network side device determines the latest uplink transmission in the transmission process of SDT, and determines a beam used for the downlink channel transmission of the terminal device according to an SSB associated with the latest uplink transmission. The beam is a transmitting beam used by the network side device for the downlink channel transmission. After determining the beam used for the downlink channel transmission, the network side device can use the determined beam to send a downlink channel.

In the CG-SDT, when the network side device switches from an RRC connected state to an RRC inactive state, an RRCresumerelease message carries information such as semi-persistent time-frequency domain resource allocation information required for SDT and timing advance (TA) validity judgment. If uplink data is to be transmitted in an inactive state, the terminal device first confirms the TA validity, a coverage condition and a size of data. If a threshold is met, the terminal device uses the semi-persistent resources configured by the network side device for SDT.

The RA-SDT is classified into two types, namely, a 2-step RACH-based SDT and a 4-step RACH-based SDT. In the 2-step RACH-based SDT, transmission of small data is performed in the PUSCH resources of an msgA. In the 4-step RACH-based SDT, small data is carried in an msg3. For RACH-based SDT, the size of data also needs to be confirmed, and only when the size of data is less than a certain threshold, the small data transmission can be performed during the RA process. Otherwise, the terminal device needs to enter the connected state through the RACH procedure and then performs the small data transmission. In addition to the limitation on the size of data, the terminal device has to compare the current SS-RSRP with a RSRP threshold before performs the small data transmission, and the small data transmission can be performed only when the current SS-RSRP is greater than the RSRP threshold. The purpose of the comparison process here is to ensure that the SDT can be performed in a good coverage condition, and waste of uplink transmission resources can be avoided.

In some embodiments, in the transmission process of SDT, determining the latest uplink transmission of the terminal device relative to the downlink channel transmission includes: in a transmission process of CG-SDT, determining that the latest uplink transmission of the terminal device relative to the downlink channel transmission is a PRACH transmission or a PUSCH transmission.

In the embodiment of the disclosure, in the transmission process of SDT, the latest uplink transmission of the terminal device relative to the downlink channel transmission is determined. In the transmission process of CG-SDT, the latest uplink transmission of the terminal device relative to the downlink channel transmission is determined to be as the PRACH transmission.

In the embodiment of the disclosure, in the transmission process of SDT, the latest uplink transmission of the terminal device relative to the downlink channel transmission is determined. In the transmission process of CG-SDT, the latest uplink transmission of the terminal device relative to the downlink channel transmission is determined to be as the PUSCH transmission.

It should be noted that in the transmission process of SDT, after the terminal device sends small data, in a case that uplink transmission includes the PUSCH transmission and the PRACH transmission, the latest uplink transmission relative to the downlink channel transmission is determined by comparing a sequence of the PUSCH transmission and the PRACH transmission. If the PRACH transmission is before the PUSCH transmission, the latest uplink transmission relative to the downlink channel transmission is determined to be the PUSCH transmission. If the PUSCH transmission is before the PRACH transmission, the latest uplink transmission relative to the downlink channel transmission is determined to be the PRACH transmission.

In some embodiments, in the transmission process of SDT, determining the latest uplink transmission of the terminal device relative to the downlink channel transmission includes: in a transmission process of RA-SDT, determining that the latest uplink transmission of the terminal device relative to the downlink channel transmission is a PRACH transmission.

In the embodiment of the disclosure, in the transmission process of SDT, the latest uplink transmission of the terminal device relative to the downlink channel transmission is determined. In the transmission process of RA-SDT, it is determined that the latest uplink transmission of the terminal device relative to the downlink channel transmission is the PRACH transmission.

It should be noted that in the process of CG-SDT or RA-SDT, if the terminal device has uplink data to be sent, but without an available uplink resource (e.g., for CG-SDT, a CG resource is invalid), the terminal device can initiate a legacy RACH procedure to request for an uplink resource (which will no longer be compared with a data volume threshold). The terminal device only carries a MAC BSR and a part of the uplink data in the msg3, and no longer sends an RRCResume message (which is similar to requesting for the uplink resource via a RACH when no available SR is present in a connected state).

In an embodiment of the disclosure, each terminal device (user) is assigned with one C-RNTI when it is in the inactive state. For CG-SDT, this C-RNTI may be the same as a C-RNTI in an RRC_CONNECTED state. For RA-SDT, this C-RNTI may be a TC-RNTI after contention resolution in the RACH procedure.

In an embodiment of the disclosure, in the RACH procedure, the msg2/msg4 (including DCI) has a QCL relationship with an SSB associated with the PRACH transmission. Similarly, the PDCCH transmission/PDSCH transmission during the process of RA-SDT or CG-SDT has a QCL relationship with an SSB associated with the PRACH transmission (for RA-SDT, in a case where the latest uplink transmission is the PRACH transmission), or the PUSCH Transmission (for CG-SDT, in a case where the latest uplink transmission is the PUSCH transmission), or the PRACH transmission (for CG-SDT, in a case where the latest uplink transmission is the PRACH transmission).

For the PDCCH transmission/PDSCH transmission in the process of CG-SDT, after the terminal device sends small data, in a case that the uplink transmission includes the PUSCH transmission and the PRACH transmission, the sequence of the PUSCH transmission and the PRACH transmission is determined. If it is determined that the latest uplink transmission is the PRACH transmission (rather than the PUCCH transmission), in the CG-SDT, transmitting and/or reception of the PDCCH or transmitting and/or reception of the PDSCH has a QCL relationship with the SSB associated with the PRACH transmission. If it is determined that the latest uplink transmission is a PUSCH transmission, in the CG-SDT, PDCCH reception/PDSCH reception has a QCL relationship with the SSB associated with the PUSCH transmission.

For transmission of the PDCCH / transmission of the PDSCH during the process of RA-SDT, after the terminal device sends small data, in a case that the uplink transmission includes the PRACH transmission, if the latest uplink transmission is the PRACH transmission, the terminal device may determine that the PDCCH transmitting/PDSCH transmitting during the process of RA-SDT has a QCL relationship with the SSB associated with the PRACH transmission.

It is understood that the terminal device may start a SDT timer, e.g., T319a, after sending small data during the process of SDT. Before the timer expires, scheduling and transmission of uplink data or downlink data may be performed between the terminal device and the network side device. When the timer expires, the terminal device enters into an idle state.

At step S22, a beam used for the downlink channel transmission of the terminal device is determined according to an SSB associated with the latest uplink transmission.

In some embodiments, the downlink channel transmission is a PDCCH transmission and/or a PDSCH transmission.

In an embodiment of the disclosure, the network side device determines the beam to be used for the downlink channel transmission of the terminal device according to the SSB associated with the latest uplink transmission. The beam used for the PDCCH transmission of the terminal device, or the beam used for the PDSCH transmission of the terminal device may be determined.

The downlink channel transmission may also be a PDCCH transmission scrambled by a C-RNTI and/or a CS-RNTI, and/or a PDSCH transmission scheduled by DCI and scrambled by the C-RNTI.

It is understood that in the transmission process of SDT, the terminal device initiates a RA request and requests an uplink resource to perform uplink data transmission. Then, the terminal device monitors the PDCCH scrambled by the C-RNTI, and receives a PDSCH or sends a PUSCH, while performing a corresponding RACH procedure.

During the transmission process of SDT, the terminal device may start an SDT timer, e.g., T319a, after sending small data. Before the timer expires, scheduling and transmission of uplink data or downlink data between the terminal device and the network side device may be carried out. When the timer expires, the terminal device enters into an idle state.

Before the timer expires, the network side device may use a beam for uplink transmission of the terminal device as a beam for downlink channel data transmission to perform downlink channel transmission. The uplink transmission of the terminal device may include: a beam used by the terminal device for the PRACH transmission, and a beam used by the terminal device for the PUSCH transmission. It is noted that the terminal device may also perform one or more PRACH transmissions or one or more PUSCH transmissions.

In this process, a downlink beam may be adjusted. If the network side device randomly selects a beam in any PRACH transmission as a transmitting beam for the downlink channel transmission, the transmitting beam may be inaccurate, resulting in downlink reception failure. If the network side device randomly selects a beam in any PUSCH transmission as the transmitting beam for the downlink channel transmission, the transmitting beam may also be inaccurate, resulting in downlink reception failure.

On the basis, in embodiments of the disclosure, the latest uplink transmission of the terminal device relative to the downlink channel transmission is determined. In the transmission process of SDT, in a case that the uplink transmission includes the PUSCH transmission and the PRACH transmission after the terminal device sends small data, the latest uplink transmission is determined by comparing a sequence of the PUSCH transmission and the PRACH transmission. If it is determined that the latest uplink transmission is the PRACH transmission (rather than the PUCCH transmission), the beam used for the downlink channel transmission of the terminal device is determined according to the SSB associated with the PRACH transmission, which can be the same beam used for the PRACH transmission. If it is determined that the latest uplink transmission is the PUSCH transmission (rather than the PUCCH transmission), the beam used for downlink channel transmission of the terminal device is determined according to the SSB associated with the PUSCH transmission, which can be the same beam used for the PUSCH transmission.

It is understood that the network side device determines the latest uplink transmission. At this point, the beam used for uplink transmission can realize uplink transmitting. The network side device can send data for downlink channel transmission through the beam, and the terminal device can receive data for downlink channel transmission through the beam. Therefore, the beam used for the downlink channel transmission can be determined, such that a downlink channel can use a suitable beam for transmission, reliability of the downlink channel transmission may be improved.

It is understood that in an embodiment of the disclosure, the network side device determines the beam used for the downlink channel transmission of the terminal device according to the SSB associated with the latest uplink transmission. During the transmission process of SDT, after sending small data, the terminal device determines, according to the SSB associated with the latest uplink transmission, the PDCCH transmission or PDSCH transmission of the terminal device is scheduling and transmission for ordinary data after sending small data in the transmission process of SDT.

In an embodiment of the disclosure, for the transmission process of CG-SDT, the SS of the PDCCH transmission may be a USS or a type-1A CSS, and may also be a type-1 CSS. For the transmission process of RA-SDT, the SS of the PDCCH transmission may be the type-1A CSS or the type-1 CSS.

It is understood that for the CG-SDT, if a time-frequency domain resource configured for the USS, type-1A CSS or type-1 CSS is overloaded, a beam between the network side device and the terminal device may not be aligned. In this case, the terminal device may not know which beam to use for the PDCCH reception, and the network side device may also not know which beam to use for the PDCCH transmitting.

On the basis, in an embodiment of the disclosure, the network side device determines the latest uplink transmission of the terminal device relative to the downlink channel transmission in the transmission process of CG-SDT, and determines the beam used for the downlink channel transmission of the terminal device according to the SSB associated with the latest uplink transmission. Similarly, the terminal device determines the latest uplink transmission, and then determines the beam used for the downlink channel transmission of the terminal device according to the SSB associated with the latest uplink transmission. In this way, the network side device and the terminal device can perform the downlink channel transmission on the determined beam, and reliability of the downlink channel transmission is improved.

It is understood that for the RA-SDT, if the time-frequency domain resource configured for the type-1A CSS or type-1 CSS is overloaded, the beam between the network-side device and the terminal device may not be aligned. In this case, the terminal device may not know which beam to use for PDCCH reception, and the network side device may also not know which beam to use for PDCCH transmitting.

On the basis, in an embodiment of the disclosure, the network side device determines the latest uplink transmission of the terminal device relative to the downlink channel transmission during the transmission process of RA-SDT, and determines the beam used for the downlink channel transmission of the terminal device according to the SSB associated with the latest uplink transmission. Similarly, the terminal device determines the latest uplink transmission, and then determines the beam used for the downlink channel transmission of the terminal device according to the SSB associated with the latest uplink transmission. In this way, the network side device and the terminal device can perform the downlink channel transmission on the determined beam, and reliability of the downlink channel transmission may be improved.

The terminal device can be provided with a USS set by sdt CG Search Space, or monitor the PDCCH by sdt Search Space, to detect DCI format 0_0 with CRC scrambled by the C-RNTI or the CS-RNTI for scheduling of the PUSCH transmission, or detect DCI format 1_0 with CRC scrambled by the C-RNTI for scheduling of the PDSCH reception. The terminal device may assume a DM-RS antenna port that is strongly associated with the PDCCH reception, the DM-RS antenna port associated with the PDSCH reception and the SS/PBCH block associated with the PUSCH transmission are quasi co-located with respect to an average gain and quasi co-location "type A" or "type D" property. The terminal device sends a PUCCH with HRQ-ACK information associated with the PDSCH receptions using the same spatial domain transmission filter as the previous PUSCH transmission.

The terminal device can be provided a CSS set by sdr Search Space to monitor the PDCCH after contention resolution, to detect a DCI format 0_0 or DCI format 1_0, with CRC scrambled by C-RNTI, for scheduling respective PUSCH transmission or PDSCH reception. Otherwise, if the terminal device is not provided with sdr Search Space, the terminal device monitors the PDCCH according to a Type-1 PDCCH CSS set. The terminal device may assume the DM-RS antenna port associated with the PDCCH reception, the DM-RS antenna port associated with the PDSCH reception and the SS/PBCH block associated with the PRACH transmission are quasi co-located with respect to the average gain and quasi co-location "type A1" or "type D" property.

In some embodiments, during the transmission process of CG-SDT, it is determined that the latest uplink transmission of the terminal device relative to downlink channel transmission is a PUSCH transmission, and the SSB associated with the PUSCH transmission has the QCL relationship with the downlink channel transmission. On the basis, in an embodiment of the disclosure, determining the beam used for downlink channel transmission of the terminal device according to the SSB associated with the latest uplink transmission may include determining the beam used for the downlink channel transmission of the terminal device according to the QCL relationship and the SSB associated with the PUSCH transmission. Therefore, the beam used for the downlink channel transmission can be determined, such that a downlink channel can use a suitable beam for transmission, reliability of the downlink channel transmission may be improved.

Determining, according to the QCL relationship and the SSB associated with the PUSCH transmission, the beam used for the downlink channel transmission of the terminal device may include determining, according to the QCL relationship and the SSB associated with the PUSCH transmission, that the beam used for downlink channel transmission of the terminal device is the same as the beam used for PUSCH transmission.

In some embodiments, during the transmission process of CG-SDT, it is determined that the latest uplink transmission of the terminal device relative to the downlink channel transmission is the PUSCH transmission. If the PUSCH transmission is a CG-PUSCH transmission, the SSB associated with the CG-PUSCH transmission has the QCL relationship with the downlink channel transmission. On the basis, in an embodiment of the disclosure, determining the beam used for the downlink channel transmission of the terminal device according to the SSB associated with the latest uplink transmission may include determining the beam used for the downlink channel transmission of the terminal device according to the QCL relationship and the SSB associated with the CG-PUSCH transmission. Therefore, the beam used for the downlink channel transmission can be determined, such that a downlink channel can use a suitable beam for transmission, reliability of the downlink channel transmission may be improved.

The CG-PUSCH may be a PUSCH pre-scheduled by the network side device.

Determining, according to the QCL relationship and the SSB associated with the CG-PUSCH transmission, the beam used for the downlink channel transmission of the terminal device may include determining that the beam used for the downlink channel transmission of the terminal device is the same as the beam used for the CG-PUSCH transmission according to the SSB associated with the CG-PUSCH transmission and the QCL relationship.

In some embodiments, in the transmission process of CG-SDT, it is determined that the latest uplink transmission of the terminal device relative to the downlink channel transmission is a PRACH transmission, and an SSB associated with the PRACH transmission has a QCL relationship with the downlink channel transmission. On the basis, in an embodiment of the disclosure, determining the beam used for the downlink channel transmission of the terminal device according to the SSB associated with the latest uplink transmission may include determining the beam used for the downlink channel transmission of the terminal device according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

Determining, according to the QCL relationship and the SSB associated with PRACH transmission, the beam used for the downlink channel transmission of the terminal device may determining, according to the QCL relationship and the SSB associated with PRACH transmission, that the beam used for the downlink channel transmission of the terminal device is the same as the beam used for PRACH transmission.

In some embodiments, in the transmission process of CG-SDT, it is determined that the latest uplink transmission relative to the downlink channel transmission of the terminal device is the PRACH transmission. In a case where random access of RACH in the PRACH transmission is successful, the SSB associated with the PRACH transmission has a QCL relationship with a designated downlink channel transmission in the downlink channel transmission. On the basis, in an embodiment of the disclosure, determining the beam used for the designated downlink channel transmission of the terminal device according to the SSB associated with the latest uplink transmission may include determining the beam used for the designated downlink channel transmission of the terminal device according to the QCL relationship and the SSB associated with the PRACH transmission. Therefore, the beam used for the downlink channel transmission can be determined, such that a downlink channel can use a suitable beam for transmission, reliability of the downlink channel transmission may be improved.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2;
PDSCH transmission not related to a message Msg4.

Determining the beam used for the designated downlink channel transmission of the terminal device according to the QCL relationship and the SSB associated with the PRACH transmission may include determining, according to the SSB associated with the PRACH transmission and the QCL relationship, that the beam used for the designated downlink channel transmission of the terminal device is the same as the beam used for the PRACH transmission.

In some embodiments, in the transmission process of RA-SDT, it is determined that the latest uplink transmission relative to the downlink channel transmission of the terminal device is the PRACH transmission, and the SSB associated with the PRACH transmission has a QCL relationship with the downlink channel transmission. On the basis, in an embodiment of the disclosure, determining, according to the SSB associated with the latest uplink transmission, the beam used for the downlink channel transmission of the terminal device may include determining the beam used for the downlink channel transmission of the terminal device according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

Determining the beam used for the downlink channel transmission of the terminal device according to the SSB associated with the PRACH transmission and the QCL relationship may include determining that the beam used for the downlink channel transmission of the terminal device is the same as the beam used for the PRACH transmission according to the SSB associated with the PRACH transmission and the QCL relationship.

In some embodiments, in the transmission process of RA-SDT, it is determined that the latest uplink transmission relative to downlink channel transmission of the terminal device is the PRACH transmission. In a case where random access of a RACH procedure in the PRACH transmission is successful, the SSB associated with the PRACH transmission have a QCL relationship with the designated downlink channel transmission in the downlink channel transmission. On the basis, in an embodiment of the disclosure, determining the beam used for the downlink channel transmission of the terminal device according to the SSB associated with the latest uplink transmission may include determining the beam used for the designated downlink channel transmission of the terminal device according to the QCL relationship and the SSB associated with the PRACH transmission. Therefore, the beam used for the downlink channel transmission can be determined, such that a downlink channel can use a suitable beam for transmission, reliability of the downlink channel transmission may be improved.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2; or
PDSCH transmission not related to a message Msg4.

Determining the beam used for the designated downlink channel transmission of the terminal device according to the SSB associated with the PRACH transmission and the QCL relationship may include determining that the beam used for the designated downlink channel transmission of the terminal device is the same as the beam used for the PRACH transmission according to the SSB associated with the PRACH transmission and the QCL relationship.

In an embodiment of the disclosure, during the transmission process of SDT, when the terminal device sends small data, a timer is started, and the terminal device initiates a legacy RACH procedure, and requests an uplink resource to send uplink data while the timer is still counting. On the basis, the subsequent data transmission procedure will not stop, and the terminal device still needs to monitor a PDCCH scrambled by C-RNTI and schedule PDSCH/PUSCH receptions/transmissions while performing the corresponding RACH procedure.

In a case that there is a possibility of adjustment in the downlink beam, in an embodiment of the disclosure, the network side device determines, in the transmission process of SDT, the latest uplink transmission relative to the downlink channel transmission of the terminal device, and determines, according to the SSB associated with the latest uplink transmission, the beam used for the downlink channel transmission of the terminal device. Therefore, the beam used for the downlink channel transmission can be determined, such that a downlink channel can use a suitable beam for transmission, reliability of the downlink channel transmission may be improved.

In addition, a time-frequency resource configured for Type 1A CSS/USS for CG-SDT and Type 1 CSS may be overlapped due to limited resources, and thus the beam between the network side device and the terminal device may not be aligned. In this case, the terminal device does not know which beam to use for PDCCH reception, and the network side device also does not know which beam to use for PDCCH transmitting. Therefore, during the transmission process of SDT, the network side device determines the latest uplink transmission relative to the downlink channel transmission of the terminal device, and determines the beam used for the downlink channel transmission of the terminal device according to the SSB associated with the latest uplink transmission, which can ensure that beams between two different search spaces are aligned. Therefore, the beam used for the downlink channel transmission can be determined, such that a downlink channel can use a suitable beam for transmission, reliability of the downlink channel transmission may be improved.

By implementing embodiments of the disclosure, during the transmission process of SDT, the network side device determines the latest uplink transmission relative to the downlink channel transmission of the terminal device, and determines the beam used for the downlink channel transmission of the terminal device according to the SSB associated with the latest uplink transmission. Therefore, the beam used for the downlink channel transmission can be determined, such that a downlink channel can use a suitable beam for transmission, reliability of the downlink channel transmission may be improved.

Please refer to FIG. 3, FIG. 3 is a flowchart of a beam determination method provided by an embodiment of the disclosure.

As illustrated in FIG. 3, the method is performed by a network side device and/or a terminal device. The method may include, but is not limited to, the following steps.

At step S31, in a transmission process of CG-SDT, it is determined that the latest uplink transmission of the terminal device relative to the downlink channel transmission is a PRACH transmission.

In an embodiment of the disclosure, in the transmission process of CG-SDT, it is determined that the latest uplink transmission of the terminal device relative to the downlink channel transmission is the PRACH transmission.

In an embodiment of the disclosure, in the transmission process of CG-SDT, it is determined that the latest uplink transmission of the terminal device relative to the downlink channel transmission is a PUSCH transmission.

It should be noted that in the transmission process of CG-SDT, if uplink transmission includes the PUSCH transmission and the PRACH transmission after the terminal device sends small data, the latest uplink transmission is determined by comparing a sequence of the PUSCH transmission and the PRACH transmission. The latest uplink transmission is determined to be as the PUSCH transmission, or the latest uplink transmission is determined to be as the PRACH transmission.

At step S32, a beam used for the downlink channel transmission of the terminal device is determined according to an SSB associated with the latest uplink transmission.

Related descriptions of the downlink channel transmission may be reference with related descriptions in the above-described embodiments, and will not be repeated herein.

In an embodiment of the disclosure, the network side device determines a transmitting beam used for the downlink channel transmission of the terminal device according to the SSB associated with the PRACH transmission, and/or the terminal device determines a receiving beam used for the downlink channel transmission of the terminal device according to the SSB associated with the PRACH transmission. Therefore, the beam used for the downlink channel transmission can be determined, such that a downlink channel can use a suitable beam for transmission, reliability of the downlink channel transmission may be improved.

In some embodiments, the SSB associated with the PRACH transmission has a QCL relationship with the downlink channel transmission, and the beam used for the downlink channel transmission of the terminal device is determined according to the SSB associated with the PRACH transmission and the QCL relationship.

In some embodiments, in a case that random access of a RACH procedure in the PRACH transmission is successful, the SSB associated with the PRACH transmission has a QCL relationship with a designated downlink channel transmission in the downlink channel transmission. According to the SSB associated with the PRACH transmission and the QCL relationship, the beam used for the designated downlink channel transmission of the terminal device is determined.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2;
PDSCH transmission not related to a message Msg4.

By implementing embodiments of the disclosure, in the transmission process of CG-SDT, the network side device determines that the latest uplink transmission of the terminal device relative to the downlink channel transmission is the PRACH transmission, and determines the beam to be used for the downlink channel transmission of the terminal device according to the SSB associated with the PRACH transmission. Therefore, the beam used for the downlink channel transmission can be determined, such that a downlink channel can use a suitable beam for transmission, reliability of the downlink channel transmission may be improved.

Please refer to FIG. 4, FIG. 4 is a flowchart of a beam determination method provided by an embodiment of the disclosure.

As illustrated in FIG. 4, the method is performed by a network side device and/or a terminal device. The method may include, but is not limited to, the following steps.

At step S41, in a transmission process of CG-SDT, it is determined that the latest uplink transmission of the terminal device relative to the downlink channel transmission is a PUSCH transmission.

In an embodiment of the disclosure, in the transmission process of CG-SDT, it is determined that the latest uplink transmission of the terminal device relative to the downlink channel transmission is a PRACH transmission.

In an embodiment of the disclosure, in the transmission process of CG-SDT, it is determined that the latest uplink transmission of the terminal device relative to the downlink channel transmission is the PUSCH transmission.

It should be noted that in the transmission process of CG-SDT, if uplink transmission includes the PUSCH transmission and the PRACH transmission after the terminal device sends small data, the latest uplink transmission is determined by comparing a sequence of the PUSCH transmission and the PRACH transmission, . The latest uplink transmission is determined to be as the PUSCH transmission, or the latest uplink transmission is determined to be as the PRACH transmission.

At step S42, a beam used for the downlink channel transmission of the terminal device is determined according to an SSB associated with the PUSCH transmission.

In an embodiment of the disclosure, the network side device determines a transmitting beam used for the downlink channel transmission of the terminal device according to the SSB associated with the PUSCH transmission, and/or the terminal device determines a receiving beam used for the downlink channel transmission of the terminal device according to the SSB associated with the PUSCH transmission. Therefore, the beam used for the downlink channel transmission can be determined, such that a downlink channel can use a suitable beam for transmission, reliability of the downlink channel transmission may be improved.

In some embodiments, the SSB associated with the PUSCH transmission has a QCL relationship with the downlink channel transmission, and the beam used for the downlink channel transmission of the terminal device is determined according to the SSB associated with the PUSCH transmission and the QCL relationship.

In some embodiments, in a case that the PUSCH transmission is a CG-PUSCH transmission, the SSB associated with the CG-PUSCH transmission has a QCL relationship with the downlink channel transmission. According to the SSB associated with the PUSCH transmission and the QCL relationship, the beam used for the downlink channel transmission of the terminal device is determined.

The CG-PUSCH may be a PUSCH pre-scheduled by the network side device.

By implementing embodiments of the disclosure, in the transmission process of CG-SDT, the network side device determines that the latest uplink transmission of the terminal device relative to downlink channel transmission is the PUSCH transmission, and determines the beam used for the downlink channel transmission of the terminal device according to the SSB associated with the PUSCH transmission. Therefore, the beam used for the downlink channel transmission can be determined, such that a downlink channel can use a suitable beam for transmission, reliability of the downlink channel transmission may be improved.

Please refer to FIG. 5, FIG. 5 is a flowchart of a beam determination method provided by an embodiment of the disclosure.

As illustrated in FIG. 5, the method is performed by a network side device and/or a terminal device. The method may include, but is not limited to, the following steps.

At step S51, in a transmission process of RA-SDT, it is determined that the latest uplink transmission of the terminal device relative to the downlink channel transmission is a PRACH transmission.

At step S52, a beam used for the downlink channel transmission of the terminal device is determined according to an SSB associated with the PRACH transmission.

In an embodiment of the disclosure, the network side device determines a transmitting beam used for the downlink channel transmission of the terminal device according to the SSB associated with the PRACH transmission, and/or the terminal device determines a receiving beam used for the downlink channel transmission of the terminal device according to the SSB associated with the PRACH transmission. Therefore, the beam used for the downlink channel transmission can be determined, such that a downlink channel can use a suitable beam for transmission, reliability of the downlink channel transmission may be improved.

In some embodiments, the SSB associated with the PRACH transmission has a QCL relationship with the downlink channel transmission, and the beam used for the downlink channel transmission of the terminal device is determined according to the SSB associated with the PRACH transmission and the QCL relationship.

In some embodiments, in a case that random access of a RACH procedure in the PRACH transmission is successful, the SSB associated with the PRACH transmission has a QCL relationship with a designated downlink channel transmission in the downlink channel transmission. According to the SSB associated with the PRACH transmission and the QCL relationship, the beam used for the downlink channel transmission of the terminal device is determined.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2; or
PDSCH transmission not related to a message Msg4.

By implementing embodiments of the disclosure, in the transmission process of RA-SDT, the network side device determines that the latest uplink transmission of the terminal device relative to the downlink channel transmission is the PRACH transmission, and determines the beam used for the downlink channel transmission of the terminal device according to the SSB associated with the PRACH transmission. Therefore, the beam used for the downlink channel transmission can be determined, such that a downlink channel can use a suitable beam for transmission, reliability of the downlink channel transmission may be improved.

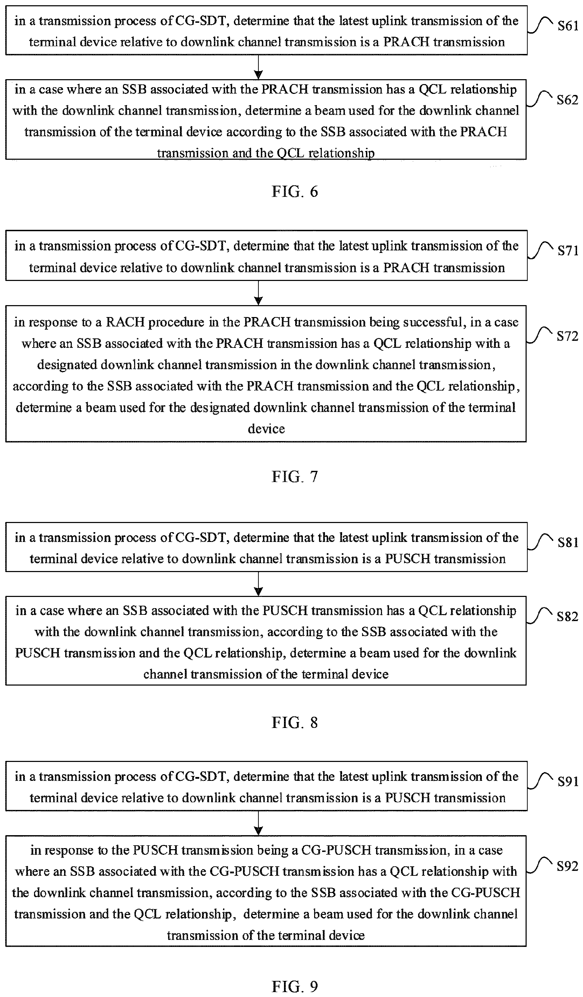

Please refer to FIG. 6, FIG. 6 is a flowchart of a beam determination method provided by an embodiment of the disclosure.

As illustrated in FIG. 6, the method is performed by a network side device and/or a terminal device. The method may include, but is not limited to, the following steps.

At step S61, in a transmission process of CG-SDT, it is determined that the latest uplink transmission of the terminal device relative to downlink channel transmission is a PRACH transmission.

In an embodiment of the disclosure, in the transmission process of CG-SDT, it is determined that the latest uplink transmission of the terminal device relative to the downlink channel transmission is the PRACH transmission.

In an embodiment of the disclosure, in the transmission process of CG-SDT, it is determined that the latest uplink transmission of the terminal device relative to the downlink channel transmission is a PUSCH transmission.

It should be noted that in the transmission process of CG-SDT, in a case that uplink transmission includes the PUSCH transmission and the PRACH transmission after the terminal device sends small data, the latest uplink transmission is determined by comparing a sequence of the PUSCH transmission and the PRACH transmission. The latest uplink transmission is determined to be as the PUSCH transmission, or the latest uplink transmission is determined to be as the PRACH transmission.

At step S62, an SSB associated with the PRACH transmission has a QCL relationship with the downlink channel transmission, and a beam used for the downlink channel transmission of the terminal device is determined according to the SSB associated with the PRACH transmission and the QCL relationship.

Relevant descriptions of steps S61 and S62 in the embodiments of the disclosure can be reference with relevant descriptions in the above embodiments, which will not be repeated herein.

In an embodiment of the disclosure, the network side device determines a transmitting beam used for the downlink channel transmission of the terminal device according to the SSB associated with the PRACH transmission and the QCL relationship, and/or the terminal device determines a receiving beam used for the downlink channel transmission of the terminal device according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

By implementing embodiments of the disclosure, in the transmission process of CG-SDT, the network side device determines that the latest uplink transmission of the terminal device relative to the downlink channel transmission is the PRACH transmission and the SSB associated with the PRACH transmission has the QCL relationship with the downlink channel transmission, and determines the beam used for the downlink channel transmission of the terminal device according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

Please refer to FIG. 7, FIG. 7 is a flowchart of a beam determination method provided by an embodiment of the disclosure.

As illustrated in FIG. 7, the method is performed by a network side device and/or a terminal device. The method may include, but is not limited to, the following steps.

At step S71, in a transmission process of CG-SDT, it is determined that the latest uplink transmission of the terminal device relative to the downlink channel transmission is a PRACH transmission.

In an embodiment of the disclosure, in the transmission process of CG-SDT, it is determined that the latest uplink transmission of the terminal device relative to the downlink channel transmission is the PRACH transmission.

In an embodiment of the disclosure, in the transmission process of CG-SDT, it is determined that the latest uplink transmission of the terminal device relative to the downlink channel transmission is a PUSCH transmission.

It should be noted that in the transmission process of CG-SDT, in a case that uplink transmission includes the PUSCH transmission and the PRACH transmission after the terminal device sends small data, the latest uplink transmission is determined by comparing a sequence of the PUSCH transmission and the PRACH transmission. The latest uplink transmission is determined to be as the PUSCH transmission, or the latest uplink transmission is determined to be as the PRACH transmission.

At step S72, in response to random access of a RACH procedure in the PRACH transmission being successful, an SSB associated with the PRACH transmission has a QCL relationship with a designated downlink channel transmission in the downlink channel transmission, according to the SSB associated with the PRACH transmission and the QCL relationship, a beam used for the designated downlink channel transmission of the terminal device is determined.

In an embodiment of the disclosure, the network side device determines the transmitting beam used for the downlink channel transmission of the terminal device according to the SSB associated with the PRACH transmission and the QCL relationship, and/or the terminal device determines a receiving beam used for the downlink channel transmission of the terminal device according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2; or
PDSCH transmission not related to a message Msg4.

Relevant descriptions of steps S71 and S72 of the embodiments of the disclosure can be reference with relevant descriptions in the above embodiments, which will not be repeated here.

By implementing the embodiments of the disclosure, in the transmission process of CG-SDT, the network side device determines that the latest uplink transmission of the terminal device relative to the downlink channel transmission is the PRACH transmission. In response to random access of the RACH procedure in the PRACH transmission being successful, the SSB associated with the PRACH transmission has the QCL relationship with the designated downlink channel transmission in the downlink channel transmission. According to the SSB associated with the PRACH transmission and the QCL relationship, the beam used for the downlink channel transmission of the terminal device is determined. Therefore, the beam used for the downlink channel transmission can be determined, such that a downlink channel can use a suitable beam for transmission, reliability of the downlink channel transmission may be improved.

Please refer to FIG. 8, FIG. 8 is a flowchart of a beam determination method provided by an embodiment of the disclosure.

As illustrated in FIG. 8, the method is performed by a network side device and/or a terminal device. The method may include, but is not limited to, the following steps.

At step S81, in a transmission process of CG-SDT, it is determined that the latest uplink transmission of the terminal device relative to downlink channel transmission is a PUSCH transmission.

In an embodiment of the disclosure, in the transmission process of CG-SDT, it is determined that the latest uplink transmission of the terminal device relative to the downlink channel transmission is a PRACH transmission.

In an embodiment of the disclosure, in the transmission process of CG-SDT, it is determined that the latest uplink transmission of the terminal device relative to the downlink channel transmission is the PUSCH transmission.

It should be noted that in the transmission process of CG-SDT, in a case that uplink transmission includes the PUSCH transmission and the PRACH transmission after the terminal device sends small data, the latest uplink transmission is determined by comparing a sequence of the PUSCH transmission and the PRACH transmission. The latest uplink transmission is determined to be as the PUSCH transmission, or the latest uplink transmission is determined to be as the PRACH transmission.

At step S82, an SSB associated with the PUSCH transmission has a QCL relationship with the downlink channel transmission, a beam used for the downlink channel transmission of the terminal device is determined according to the SSB associated with the PUSCH transmission and the QCL relationship.

Relevant descriptions of steps S81 and S82 of the embodiments of the disclosure can be reference with the relevant descriptions in the above embodiments, which will not be repeated here.

In an embodiment of the disclosure, the network side device determines a transmitting beam used for the downlink channel transmission of the terminal device according to the SSB associated with the PUSCH transmission and the QCL relationship, and/or the terminal device determines a receiving beam used for the downlink channel transmission of the terminal device according to the SSB associated with the PUSCH transmission and the QCL relationship. Therefore, the beam used for the downlink channel transmission can be determined, such that a downlink channel can use a suitable beam for transmission, reliability of the downlink channel transmission may be improved.

By implementing the embodiments of the disclosure, in the transmission process of CG-SDT, the network side device determines that the latest uplink transmission of the terminal device relative to the downlink channel transmission is the PUSCH transmission. The SSB associated with the PUSCH transmission has the QCL relationship with the downlink channel transmission. According to the SSB associated with the PUSCH transmission and the QCL relationship, the beam used for the downlink channel transmission of the terminal device is determined. Therefore, the beam used for the downlink channel transmission can be determined, such that a downlink channel can use a suitable beam for transmission, reliability of the downlink channel transmission may be improved.

Please refer to FIG. 9, FIG. 9 is a flowchart of a beam determination method provided by an embodiment of the disclosure.

As illustrated in FIG. 9, the method is performed by a network side device and/or a terminal device. The method may include, but is not limited to, the following steps.

At step S91, in a transmission process of CG-SDT, it is determined that the latest uplink transmission of the terminal device relative to the downlink channel transmission is a PUSCH transmission.

In an embodiment of the disclosure, in the transmission process of CG-SDT, it is determined that the latest uplink transmission of the terminal device relative to the downlink channel transmission is a PRACH transmission.

In an embodiment of the disclosure, in the transmission process of CG-SDT, it is determined that the latest uplink transmission of the terminal device relative to the downlink channel transmission is the PUSCH transmission.

It should be noted that in the transmission process of CG-SDT, if uplink transmission includes the PUSCH transmission and the PRACH transmission after the terminal device sends small data, the latest uplink transmission is determined by comparing a sequence of the PUSCH transmission and the PRACH transmission. The latest uplink transmission is determined to be as the PUSCH transmission, or the latest uplink transmission is determined to be as the PRACH transmission.

At step S92, in response to the PUSCH transmission being a CG-PUSCH transmission, an SSB associated with the CG-PUSCH transmission has a QCL relationship with the downlink channel transmission, a beam used for the downlink channel transmission of the terminal device is determined according to the SSB associated with the CG-PUSCH transmission and the QCL relationship.

The relevant descriptions of steps S91 and S92 of the embodiments of the disclosure can be reference with the relevant descriptions in the above embodiments, which will not be repeated here.

In the embodiment of the disclosure, the network side device determines a transmitting beam used for the downlink channel transmission of the terminal device according to the SSB associated with the CG-PUSCH transmission and the QCL relationship, and/or the terminal device determines a receiving beam used for the downlink channel transmission of the terminal device according to the SSB associated with the CG-PUSCH transmission and the QCL relationship. Therefore, the beam used for the downlink channel transmission can be determined, such that a downlink channel can use a suitable beam for transmission, reliability of the downlink channel transmission may be improved.

By implementing the embodiments of the disclosure, in the transmission process of CG-SDT, the network side device determines that the latest uplink transmission of the terminal device relative to the downlink channel transmission is the PUSCH transmission. In response to the PUSCH transmission being the CG-PUSCH transmission, the SSB associated with the CG-PUSCH transmission has the QCL relationship with the downlink channel transmission. According to the SSB associated with the CG-PUSCH transmission and the QCL relationship, the beam used for the downlink channel transmission of the terminal device is determined. Therefore, the beam used for the downlink channel transmission can be determined, such that a downlink channel can use a suitable beam for transmission, reliability of the downlink channel transmission may be improved.

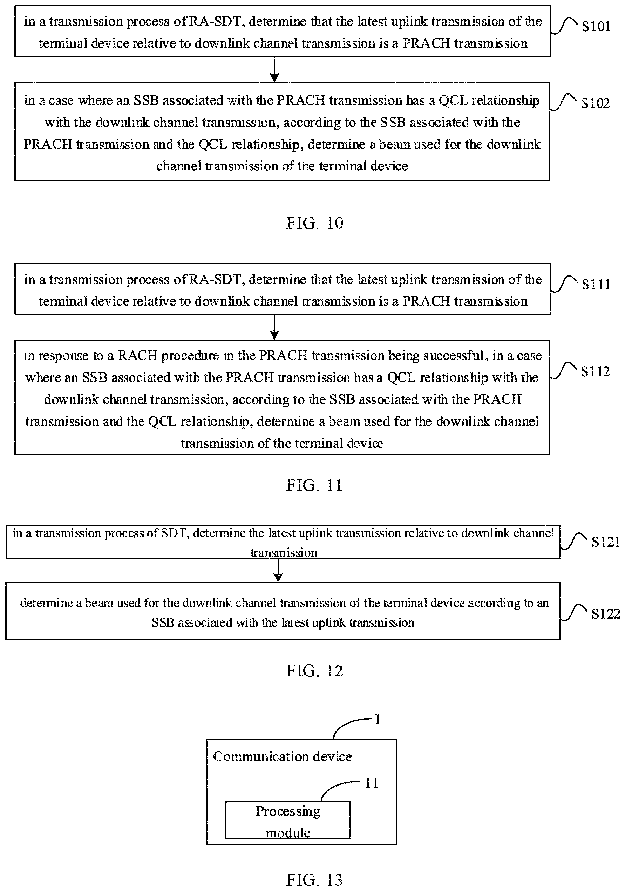

Refer to FIG. 10, FIG. 10 is a flowchart of a beam determination method provided by an embodiment of the disclosure.

As illustrated in FIG. 10, the method is performed by a network side device and/or a terminal device. The method may include, but is not limited to, the following steps.

At step S101, in a transmission process of RA-SDT, it is determined that the latest uplink transmission of the terminal device relative to the downlink channel transmission is a PRACH transmission.

At step S102, an SSB associated with the PRACH transmission has a QCL relationship with the downlink channel transmission, a beam used for the downlink channel transmission of the terminal device is determined according to the SSB associated with the PRACH transmission and the QCL relationship.

The relevant descriptions of steps S101 and S102 of the embodiments of the disclosure can be reference with the relevant descriptions in the above embodiments, which will not be repeated here.

In the embodiment of the disclosure, the network side device determines a transmitting beam used for the downlink channel transmission of the terminal device according to the SSB associated with the PRACH transmission and the QCL relationship, and/or the terminal device determines a receiving beam used for the downlink channel transmission of the terminal device according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

By implementing the embodiments of the disclosure, in the transmission process of RA-SDT, the network side device determines that the latest uplink transmission of the terminal device relative to the downlink channel transmission is the PRACH transmission. The SSB associated with the PRACH transmission has the QCL relationship with the downlink channel transmission. The beam used for the downlink channel transmission of the terminal device is determined according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

Refer to FIG. 11, FIG. 11 is a flowchart of a beam determination method provided by an embodiment of the disclosure.

As illustrated in FIG. 11, the method is performed by a network side device and/or a terminal device. The method may include, but is not limited to, the following steps.

At step S111, in a transmission process of RA-SDT, it is determined that the latest uplink transmission of the terminal device relative to the downlink channel transmission is a PRACH transmission.

At step S112, in response to random access of a RACH procedure in the PRACH transmission being successful, an SSB associated with the PRACH transmission has a QCL relationship with a designated downlink channel transmission in the downlink channel transmission, a beam used for the designated downlink channel transmission of the terminal device is determined according to the SSB associated with the PRACH transmission and the QCL relationship.

In an embodiment of the disclosure, the network side device determines a transmitting beam used for the downlink channel transmission of the terminal device according to the SSB associated with the PRACH transmission and the QCL relationship, and/or the terminal device determines a receiving beam used for the downlink channel transmission of the terminal device according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2; or
PDSCH transmission not related to a message Msg4.

The relevant descriptions of steps S111 and S112 of the embodiments of the disclosure can be reference with the relevant descriptions in the above embodiments, which will not be repeated here.

By implementing the embodiments of the disclosure, in the transmission process of RA-SDT, the network side device determines that the latest uplink transmission of the terminal device relative to the downlink channel transmission is the PRACH transmission. In response to random access of the RACH procedure in the PRACH transmission being successful, the SSB associated with the PRACH transmission has the QCL relationship with the designated downlink channel transmission in the downlink channel transmission. The beam used for the designated downlink channel transmission of the terminal device is determined according to the SSB associated with the PRACH transmission and the QCL relationship. Therefore, the beam used for the downlink channel transmission can be determined, such that a downlink channel can use a suitable beam for transmission, reliability of the downlink channel transmission may be improved.

Please refer to FIG. 12, FIG. 12 is a flowchart of a beam determination method provided by an embodiment of the disclosure.

As illustrated in FIG. 12, the method is performed by a terminal device. The method may include, but is not limited to, the following steps.

At step S121, in a transmission process of SDT, latest uplink transmission relative to downlink channel transmission is determined.

At step S122, a beam used for the downlink channel transmission of the terminal device is determined according to an SSB associated with the latest uplink transmission.

In an embodiment of the disclosure, in the transmission process of SDT, the network side device determines the latest uplink transmission of the terminal device relative to the downlink channel transmission. In the transmission process of SDT, the terminal device may perform one or more uplink transmissions, and determine the latest uplink transmission of the terminal device relative to the downlink channel transmission. In a case that the terminal device performs one uplink transmission, this transmission can be determined as the first uplink transmission of the terminal device. In a case that the terminal device performs multiple uplink transmissions, the latest uplink transmission of the terminal device relative to the downlink channel transmission may be determined.

In an embodiment of the disclosure, in the transmission process of SDT, the terminal device determines the latest uplink transmission, and determines, according to the SSB associated with the latest uplink transmission, that the beam used for the downlink channel transmission of the terminal device is a receiving beam used by the terminal device for receiving a downlink channel. Therefore, after determining the beam used for the downlink channel transmission, the terminal device may use the determined beam for reception of the downlink channel.

It is understood that the SDT may be SDT based on a RA process or SDT configured based on a semi-persistent status. The SDT based on the RA process is also called as RA-SDT, and the SDT configured based on the semi-persistent status is also called as a CG-SDT.

In the CG-SDT, when the network side device switches from an RRC connected state to an RRC inactive state, an RRCresumerelease message carries information such as semi-persistent time-frequency domain resource allocation information required for SDT and TA validity judgment. If uplink data is to be transmitted in an inactive state, the terminal device first confirms the TA validity, a coverage condition and a size of data. If a threshold is met, the terminal device uses the semi-persistent resources configured by the network side device for SDT.

The RA-SDT is classified into two types, namely, a 2-step RACH-based SDT and a 4-step RACH-based SDT. In the 2-step RACH-based SDT, transmission of small data is performed in the PUSCH resources of an msgA. In the 4-step RACH-based SDT, small data is carried in an msg3. For RACH-based SDT, the size of data also needs to be confirmed, and only when the size of data is less than a certain threshold, the small data transmission can be performed during the RA process. Otherwise, the terminal device needs to enter the connected state through the RACH procedure and then performs the small data transmission. In addition to the limitation on the size of data, the terminal device has to compare the current SS-RSRP with a RSRP threshold before performs the small data transmission, and the small data transmission can be performed only when the current SS-RSRP is greater than the RSRP threshold. The purpose of the comparison process here is to ensure that the SDT can be performed in a good coverage condition, and waste of uplink transmission resources can be avoided.

In some embodiments, in the transmission process of SDT, determining the latest uplink transmission of the terminal device relative to the downlink channel transmission includes: in a transmission process of CG-SDT, determining that the latest uplink transmission of the terminal device relative to the downlink channel transmission is a PRACH transmission or a PUSCH transmission.

In an embodiment of the disclosure, in the transmission process of SDT, the latest uplink transmission of the terminal device relative to the downlink channel transmission is determined. In the transmission process of CG-SDT, it is determined that the latest uplink transmission of the terminal device relative to the downlink channel transmission is the PRACH transmission.

In an embodiment of the disclosure, in the transmission process of SDT, the latest uplink transmission of the terminal device relative to the downlink channel transmission is determined. In the transmission process of CG-SDT, it is determined that the latest uplink transmission of the terminal device relative to the downlink channel transmission is the PUSCH transmission.

In an embodiment of the disclosure, in the transmission process of CG-SDT, it is determined that the latest uplink transmission of the terminal device relative to the downlink channel transmission is the PRACH transmission.

In an embodiment of the disclosure, in the transmission process of CG-SDT, it is determined that the latest uplink transmission of the terminal device relative to the downlink channel transmission is the PUSCH transmission.

It should be noted that in the transmission process of CG-SDT, in a case uplink transmission includes the PUSCH transmission and the PRACH transmission after the terminal device sends small data, the latest uplink transmission is determined by comparing a sequence of the PUSCH transmission and the PRACH transmission. If the PRACH transmission is before the PUSCH transmission, the latest uplink transmission relative to the downlink channel transmission is determined to be as the PUSCH transmission. If the PUSCH transmission is before the PRACH transmission, the latest uplink transmission relative to the downlink channel transmission is determined to be as the PRACH transmission.

In some embodiments, in the transmission process of SDT, determining the latest uplink transmission of the terminal device relative to the downlink channel transmission includes: in a transmission process of RA-SDT, determining that the latest uplink transmission of the terminal device relative to the downlink channel transmission is a PRACH transmission.

In the embodiment of the disclosure, in the transmission process of SDT, the latest uplink transmission of the terminal device relative to downlink channel transmission is determined. In a transmission process of RA-SDT, it is determined that the latest uplink transmission of the terminal device relative to downlink channel transmission is a PRACH transmission.

It should be noted that in the process of CG-SDT or RA-SDT, if the terminal device has uplink data to be sent, but without an available uplink resource (e.g., for CG-SDT, a CG resource is invalid), the terminal device can initiate a legacy RACH procedure to request for an uplink resource (which will no longer be compared with a data volume threshold). The terminal device only carries a MAC BSR and a part of the uplink data in the msg3, and no longer sends an RRCResume message (which is similar to requesting for the uplink resource via a RACH when no available SR is present in a connected state).

In an embodiment of the disclosure, each terminal device (user) is assigned with one C-RNTI when it is in the inactive state. For CG-SDT, this C-RNTI may be the same as a C-RNTI in an RRC_CONNECTED state. For RA-SDT, this C-RNTI may be a TC-RNTI after contention resolution in the RACH procedure.

In an embodiment of the disclosure, in the RACH procedure, the msg2/msg4 (including DCI) has a QCL relationship with an SSB associated with the PRACH transmission. Similarly, the PDCCH transmission/PDSCH transmission during the process of RA-SDT or CG-SDT has a QCL relationship with an SSB associated with the PRACH transmission (for RA-SDT, in a case where the latest uplink transmission is the PRACH transmission), or the PUSCH Transmission (for CG-SDT, in a case where the latest uplink transmission is the PUSCH transmission), or the PRACH transmission (for CG-SDT, in a case where the latest uplink transmission is the PRACH transmission).

For the PDCCH transmission/PDSCH transmission in the process of CG-SDT, after the terminal device sends small data, in a case that the uplink transmission includes the PUSCH transmission and the PRACH transmission, the sequence of the PUSCH transmission and the PRACH transmission is determined. If it is determined that the latest uplink transmission is the PRACH transmission (rather than the PUCCH transmission), in the CG-SDT, transmitting and/or reception of the PDCCH or transmitting and/or reception of the PDSCH has a QCL relationship with the SSB associated with the PRACH transmission. If it is determined that the latest uplink transmission is a PUSCH transmission, in the CG-SDT, PDCCH reception/PDSCH reception has a QCL relationship with the SSB associated with the PUSCH transmission.

For transmission of the PDCCH / transmission of the PDSCH during the process of RA-SDT, after the terminal device sends small data, in a case that the uplink transmission includes the PRACH transmission, if the latest uplink transmission is the PRACH transmission, the terminal device may determine that the PDCCH transmitting/PDSCH transmitting during the process of RA-SDT has a QCL relationship with the SSB associated with the PRACH transmission.

It is understood that the terminal device may start a SDT timer, e.g., T319a, after sending small data during the process of SDT. Before the timer expires, scheduling and transmission of uplink data or downlink data may be performed between the terminal device and the network side device. When the timer expires, the terminal device enters into an idle state.

In an embodiment of the disclosure, the terminal device determines, in the transmission process of SDT, the latest uplink transmission to determine the beam used for the downlink channel transmission of the terminal device according to the SSB associated with the latest uplink transmission.

In some embodiments, the downlink channel transmission is a PDCCH transmission and/or a PDSCH transmission.

In an embodiment of the disclosure, the terminal device determines the beam to be used for the downlink channel transmission of the terminal device according to the SSB associated with the latest uplink transmission. The beam used for the PDCCH transmission of the terminal device, or the beam used for the PDSCH transmission of the terminal device may be determined.

The downlink channel transmission may also be a PDCCH transmission scrambled by a C-RNTI and/or a CS-RNTI, and/or a PDSCH transmission scheduled by DCI and scrambled by the C-RNTI.

It is understood that in the transmission process of SDT, the terminal device initiates a RA request and requests an uplink resource to perform uplink data transmission. Then, the terminal device monitors the PDCCH scrambled by the C-RNTI, and receives a PDSCH or sends a PUSCH, while performing a corresponding RACH procedure.

During the transmission process of SDT, the terminal device may start an SDT timer, e.g., T319a, after sending small data. Before the timer expires, scheduling and transmission of uplink data or downlink data between the terminal device and the network side device may be carried out. When the timer expires, the terminal device enters into an idle state.

Before the timer expires, the network side device may use a beam for uplink transmission of the terminal device as a beam for downlink channel data transmission to perform downlink channel transmission. The uplink transmission of the terminal device may include: a beam used by the terminal device for PRACH transmission, and a beam used by the terminal device for PUSCH transmission. It is noted that the terminal device may also perform one or more PRACH transmissions or one or more PUSCH transmissions.

In this process, downlink beam may be adjusted. If the network side device randomly selects a beam in any PRACH transmission as a receiving beam for downlink channel transmission, the receiving beam may be inaccurate, resulting in downlink reception failure. If it randomly selects a beam in any PUSCH transmission as a receiving beam for downlink channel transmission, the receiving beam may also be inaccurate, resulting in downlink reception failure.

On the basis, in embodiments of the disclosure, the latest uplink transmission of the terminal device relative to the downlink channel transmission is determined. In the transmission process of SDT, in a case that the uplink transmission includes the PUSCH transmission and the PRACH transmission after the terminal device sends small data, the latest uplink transmission is determined by comparing a sequence of the PUSCH transmission and the PRACH transmission. If it is determined that the latest uplink transmission is the PRACH transmission (rather than the PUCCH transmission), the beam used for the downlink channel transmission of the terminal device is determined according to the SSB associated with the PRACH transmission, which can be the same beam used for the PRACH transmission. If it is determined that the latest uplink transmission is the PUSCH transmission (rather than the PUCCH transmission), the beam used for downlink channel transmission of the terminal device is determined according to the SSB associated with the PUSCH transmission, which can be the same beam used for the PUSCH transmission.

It is understood that the terminal device determines the latest uplink transmission. At this point, the beam used for uplink transmission can realize uplink transmitting. The network side device can send data for downlink channel transmission through the beam, and the terminal device can receive data for downlink channel transmission through the beam. Therefore, the beam used for the downlink channel transmission can be determined, such that a downlink channel can use a suitable beam for transmission, reliability of the downlink channel transmission may be improved.

It is understood that in an embodiment of the disclosure, the network side device determines the beam used for the downlink channel transmission of the terminal device according to the SSB associated with the latest uplink transmission. During the transmission process of SDT, after sending small data, the terminal device determines, according to the SSB associated with the latest uplink transmission, the PDCCH transmission or PDSCH transmission of the terminal device is scheduling and transmission for ordinary data after sending small data in the transmission process of SDT.

In an embodiment of the disclosure, for the transmission process of CG-SDT, the SS of the PDCCH transmission may be a USS or a type-1A CSS, and may also be a type-1 CSS. For the transmission process of RA-SDT, the SS of the PDCCH transmission may be the type-1A CSS or the type-1 CSS.

It is understood that for the CG-SDT, if a time-frequency domain resource configured for the USS, type-1A CSS or type-1 CSS is overloaded, a beam between the network side device and the terminal device may not be aligned. In this case, the terminal device may not know which beam to use for the PDCCH reception, and the network side device may also not know which beam to use for the PDCCH transmitting.

On the basis, in an embodiment of the disclosure, the network side device determines the latest uplink transmission of the terminal device relative to the downlink channel transmission in the transmission process of CG-SDT, and determines the beam used for the downlink channel transmission of the terminal device according to the SSB associated with the latest uplink transmission. Similarly, the terminal device determines the latest uplink transmission, and then determines the beam used for the downlink channel transmission of the terminal device according to the SSB associated with the latest uplink transmission. In this way, the network side device and the terminal device can perform the downlink channel transmission on the determined beam, and reliability of the downlink channel transmission is improved.

It is understood that for the RA-SDT, if the time-frequency domain resource configured for the type-1A CSS or type-1 CSS is overloaded, the beam between the network-side device and the terminal device may not be aligned. In this case, the terminal device may not know which beam to use for PDCCH reception, and the network side device may also not know which beam to use for PDCCH transmitting.

On the basis, in an embodiment of the disclosure, the network side device determines the latest uplink transmission of the terminal device relative to the downlink channel transmission during the transmission process of RA-SDT, and determines the beam used for the downlink channel transmission of the terminal device according to the SSB associated with the latest uplink transmission. Similarly, the terminal device determines the latest uplink transmission, and then determines the beam used for the downlink channel transmission of the terminal device according to the SSB associated with the latest uplink transmission. In this way, the network side device and the terminal device can perform the downlink channel transmission on the determined beam, and reliability of the downlink channel transmission may be improved.

In some embodiments, in the transmission process of CG-SDT, it is determined that the latest uplink transmission of the terminal device relative to the downlink channel transmission is the PUSCH transmission, and that the SSB associated with the PUSCH transmission has the QCL relationship with the downlink channel transmission. On the basis, in an embodiment of the disclosure, the beam used for the downlink channel transmission of the terminal device may be determined according to the SSB associated with the PUSCH transmission and the QCL relationship. In this way, the receiving beam used for the downlink channel transmission can be determined, such that a downlink channel can use a suitable receiving beam for transmission, reliability of the downlink channel transmission may be improved.

Determining, the receiving beam used for the downlink channel transmission of the terminal device according to the SSB associated with the PUSCH transmission and the QCL relationship may include determining that the beam used for the downlink channel transmission of the terminal device is the same as the beam used for the PUSCH transmission according to the SSB associated with the PUSCH transmission and the QCL relationship.

In some embodiments, during the transmission process of CG-SDT, it is determined that the latest uplink transmission of the terminal device relative to the downlink channel transmission is the PUSCH transmission. If the PUSCH transmission is a CG-PUSCH transmission, the SSB associated with the CG-PUSCH transmission has the QCL relationship with the downlink channel transmission. On the basis, in an embodiment of the disclosure, the beam used for the downlink channel transmission of the terminal device is determined according to the SSB associated with the CG-PUSCH transmission and the QCL relationship. In this way, the receiving beam used for the downlink channel transmission can be determined, such that a downlink channel can use a suitable beam for transmission, reliability of the downlink channel transmission may be improved.

The CG-PUSCH may be a PUSCH pre-scheduled by the network side device.

Determining, according to the QCL relationship and the SSB associated with the CG-PUSCH transmission, the beam used for the downlink channel transmission of the terminal device may include determining that the beam used for the downlink channel transmission of the terminal device is the same as the beam used for the CG-PUSCH transmission according to the SSB associated with the CG-PUSCH transmission and the QCL relationship.

In some embodiments, in the transmission process of CG-SDT, it is determined that the latest uplink transmission of the terminal device relative to the downlink channel transmission is a PRACH transmission, and an SSB associated with the PRACH transmission has a QCL relationship with the downlink channel transmission. On the basis, in an embodiment of the disclosure, the beam used for the downlink channel transmission of the terminal device is determined according to the SSB associated with the PRACH transmission and the QCL relationship. Therefore, the receiving beam used for downlink channel transmission can be determined, such that a downlink channel can use a suitable beam for transmission, reliability of the downlink channel transmission may be improved.

Determining, according to the QCL relationship and the SSB associated with PRACH transmission, the beam used for the downlink channel transmission of the terminal device may determining, according to the QCL relationship and the SSB associated with PRACH transmission, that the beam used for the downlink channel transmission of the terminal device is the same as the beam used for PRACH transmission.

In some embodiments, in the transmission process of CG-SDT, it is determined that the latest uplink transmission relative to the downlink channel transmission of the terminal device is the PRACH transmission. In a case where random access of RACH in the PRACH transmission is successful, the SSB associated with the PRACH transmission has a QCL relationship with a designated downlink channel transmission in the downlink channel transmission. On the basis, in an embodiment of the disclosure, the beam used for the designated downlink channel transmission of the terminal device is determined according to the SSB associated with the PRACH transmission and the QCL relationship. Therefore, the receiving beam used for the downlink channel transmission can be determined, such that a downlink channel can use a suitable beam for transmission, reliability of the downlink channel transmission may be improved.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2; or
PDSCH transmission not related to a message Msg4.

Determining the beam used for the designated downlink channel transmission of the terminal device according to the QCL relationship and the SSB associated with the PRACH transmission may include determining, according to the SSB associated with the PRACH transmission and the QCL relationship, that the beam used for the designated downlink channel transmission of the terminal device is the same as the beam used for the PRACH transmission.

In some embodiments, in the transmission process of RA-SDT, it is determined that the latest uplink transmission relative to the downlink channel transmission of the terminal device is the PRACH transmission, and the SSB associated with the PRACH transmission has a QCL relationship with the downlink channel transmission. On the basis, in an embodiment of the disclosure, the beam used for downlink channel transmission of the terminal device is determined according to the SSB associated with the PRACH transmission and the QCL relationship. Therefore, the receiving beam used for downlink channel transmission can be determined, such that a downlink channel can use a suitable beam for transmission, reliability of the downlink channel transmission may be improved.

Determining the beam used for the downlink channel transmission of the terminal device according to the SSB associated with the PRACH transmission and the QCL relationship may include determining that the beam used for the downlink channel transmission of the terminal device is the same as the beam used for the PRACH transmission according to the SSB associated with the PRACH transmission and the QCL relationship.

In some embodiments, in the transmission process of RA-SDT, it is determined that the latest uplink transmission relative to downlink channel transmission of the terminal device is the PRACH transmission. In a case where random access of a RACH procedure in the PRACH transmission is successful, the SSB associated with the PRACH transmission have a QCL relationship with the designated downlink channel transmission in the downlink channel transmission. On the basis, in an embodiment of the disclosure, the beam used for the designated downlink channel transmission of the terminal device may be determined according to the SSB associated with the PRACH transmission and the QCL relationship. Therefore, the receiving beam used for downlink channel transmission can be determined, such that a downlink channel can use a suitable beam for transmission, reliability of the downlink channel transmission may be improved.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2;
PDSCH transmission not related to a message Msg4.

Determining the beam used for the designated downlink channel transmission of the terminal device according to the SSB associated with the PRACH transmission and the QCL relationship may include determining that the beam used for the designated downlink channel transmission of the terminal device is the same as the beam used for the PRACH transmission according to the SSB associated with the PRACH transmission and the QCL relationship.

By implementing embodiments of the disclosure, the terminal device determines, in the transmission process of SDT, the latest uplink transmission of the terminal device relative to the downlink channel transmission, and then determines the beam used for the downlink channel transmission of the terminal device according to the SSB associated with the latest uplink transmission. Therefore, the beam used for the downlink channel transmission can be determined, such that a downlink channel can use a suitable beam for transmission, reliability of the downlink channel transmission may be improved.

In the above embodiments of the disclosure, the methods provided in embodiments of the disclosure are described from perspectives of the network side device and the terminal device, respectively. In order to realize each of functions in the methods provided by the above embodiments of the disclosure, the network side device and the terminal device may include a hardware structure, a software module, and realize each of the above functions in the form of the hardware structure, the software module, or a combination of the hardware structure and the software module. A certain function of the above functions may be performed in the form of a hardware structure, a software module, or a combination of the hardware structure and the software module.

FIG. 13 is a structural diagram of a communication device 1 provided by an embodiment of the disclosure. The communication device 1 shown in FIG. 13 includes a transceiver module and a processing module 11. The transceiver module includes a transmitting module and/or a receiving module. The transmitting module is configured to implement a transmitting function, and the receiving module is configured to implement a receiving function. The transceiver module may implement the transmitting function and/or the receiving function.

The communication device 1 may be a terminal device, a device in the terminal device, or a device capable of being used together with the terminal device. Alternatively, the communication device 1 may be a network side device, a device in the network side device, or a device capable of being used together with the network side device.

If the communication device 1 is a network side device,
the device includes a processing module 11.

The processing module 11 is configured to, in a transmission process of SDT, determine latest uplink transmission of a terminal device relative to downlink channel transmission.

The processing module 11 is further configured to determine a beam used for the downlink channel transmission of the terminal device according to an SSB associated with the latest uplink transmission.

In some embodiments, the processing module 11 is configured to, in a transmission process of CG-SDT, determine that the latest uplink transmission of the terminal device relative to the downlink channel transmission is a PRACH transmission or a PUSCH transmission.

In some embodiments, the processing module 11 is configured to, in a transmission process of RA-SDT, determine that the latest uplink transmission of the terminal device relative to the downlink channel transmission is a PRACH transmission.

In some embodiments, the SSB associated with the PUSCH transmission has a QCL relationship with the downlink channel transmission, the processing module 11 is configured to determine a beam used for the downlink channel transmission of the terminal device according to the SSB associated with the PUSCH transmission and the QCL relationship.

In some embodiments, in a case where the PUSCH transmission is CG-PUSCH transmission, and the SSB associated with the CG-PUSCH transmission has a QCL relationship with the downlink channel transmission, and the processing module 11 is configured to determine a beam used for the downlink channel transmission of the terminal device according to the SSB associated with the CG-PUSCH transmission and the QCL relationship.

In some embodiments, an SSB associated with the PRACH transmission has a QCL relationship with the downlink channel transmission, and the processing module 11 is configured to determine a beam used for the downlink channel transmission of the terminal device according to the SSB associated with the PRACH transmission and the QCL relationship.

In some embodiments, in the transmission process of SDT, the PRACH transmission is initiated, and in response to random access of a RACH procedure being successful, an SSB associated with the PRACH transmission has a QCL relationship with a designated downlink channel transmission in the downlink channel transmission, the processing module 11 is configured to determine, according to the SSB associated with the PRACH transmission and the QCL relationship, a beam used for the designated downlink channel transmission of the terminal device.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2; or
PDSCH transmission not related to a message Msg4.

In some embodiments, the downlink channel transmission is a PDCCH transmission and/or a PDSCH transmission.

If the communication device 1 is a terminal device,
the device includes a processing module 11.

The processing module 11 is configured to, in a transmission process of SDT, determine latest uplink transmission relative to downlink channel transmission.

The processing module 11 is further configured to determine a beam used for the downlink channel transmission of the terminal device according to an SSB associated with the latest uplink transmission.

In some embodiments, the processing module 11 is configured to in a transmission process of CG-SDT, determine that the latest uplink transmission relative to downlink channel transmission is a PRACH transmission or a PUSCH transmission.

In some embodiments, the processing module 11 is configured to, in a transmission process of RA-SDT, determine that the latest uplink transmission relative to downlink channel transmission is a PRACH transmission.

In some embodiments, the SSB associated with the PUSCH transmission has a QCL relationship with the downlink channel transmission, the processing module 11 is configured to determine a beam used for the downlink channel transmission of the terminal device according to the SSB associated with the PUSCH transmission and the QCL relationship.

In some embodiments, in a case where the PUSCH transmission is a CG-PUSCH transmission, and an SSB associated with the CG-PUSCH transmission has a QCL relationship with the downlink channel transmission, the processing module 11 is configured to determine a beam used for the downlink channel transmission of the terminal device according to the SSB associated with the CG-PUSCH transmission and the QCL relationship.

In some embodiments, an SSB associated with the PRACH transmission has a QCL relationship with the downlink channel transmission, and the processing module 11 is configured to determine a beam used for the downlink channel transmission of the terminal device according to the SSB associated with the PRACH transmission and the QCL relationship.

In some embodiments, in the transmission process of SDT, the PRACH transmission is initiated, and in response to random access of a RACH procedure being successful, an SSB associated with the PRACH transmission has a QCL relationship with a designated downlink channel transmission in the downlink channel transmission, and the processing module 11 is configured to determine, according to the SSB associated with the PRACH transmission and the QCL relationship, a beam used for the designated downlink channel transmission of the terminal device.

The designated downlink channel transmission includes at least one of:
PDCCH transmission not related to a message Msg2;
PDCCH transmission not related to a message Msg3;
PDCCH transmission not related to a message Msg4;
PDSCH transmission not related to a message Msg2; or
PDSCH transmission not related to a message Msg4.

In some embodiments, the downlink channel transmission is a PDCCH transmission and/or a PDSCH transmission.

With respect to the communication device 1 in the above embodiments, a specific manner in which each module performs an operation has been described in detail in the method embodiments, and will not be described in detail herein. The communication device 1 provided in the above embodiments of the disclosure achieves the same or similar beneficial effects as the beam determination method provided in some of the above embodiments, and will not be described in detail herein.

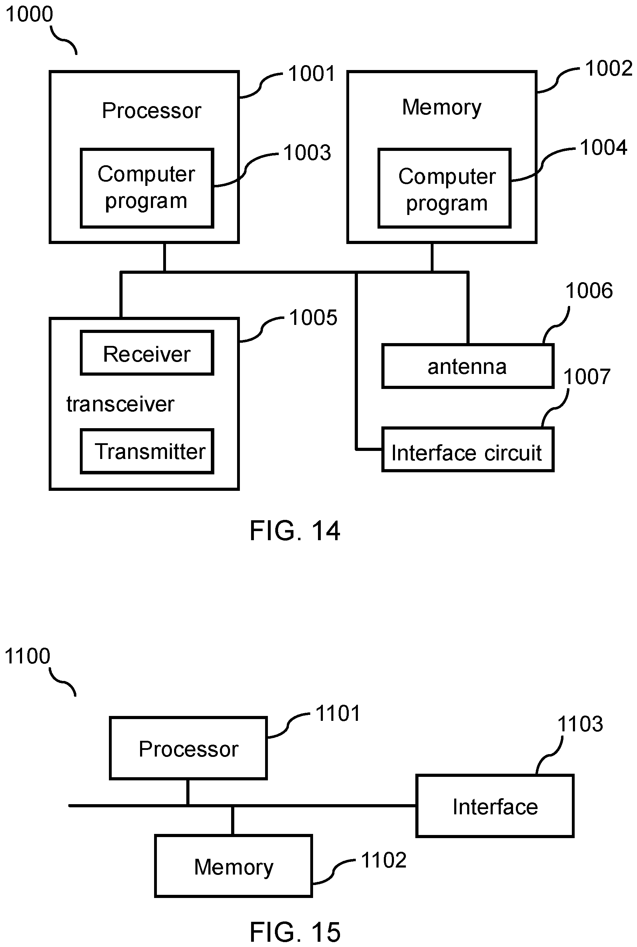

FIG. 14 is a structural diagram of another communication device 1000 provided by an embodiment of the disclosure. The communication device 1000 may be a network side device or a terminal device, or may be a chip, a chip system or a processor that supports the network side device to realize the above-described methods, or may be a chip, a chip system or a processor that supports the terminal device to realize the above-described methods. The communication device 1000 may be used to realize the methods described in the above method embodiments with reference to the description of the above-described method embodiments.

The communication device 1000 may include one or more processors 1001. The processor 1001 may be a general purpose processor or a dedicated processor, such as, a baseband processor and a central processor. The baseband processor is used for processing communication protocols and communication data. The central processor is used for controlling the communication device (e.g., a network side device, a baseband chip, a terminal device, a terminal device chip, a DU, or a CU), executing computer programs, and processing data of the computer programs.

Optionally, the communication device 1000 may include one or more memories 1002 on which computer programs 1004 may be stored. The processor 1001 executes the computer programs 1004 to cause the communication device 1000 to perform the methods described in the above method embodiments. Optionally, the memory 1002 may also store data. The communication device 1000 and the memory 1002 may be provided separately or may be integrated together.

Optionally, the communication device 1000 may also include a transceiver 1005 and an antenna 1006. The transceiver 1005 may be referred to as a transceiver unit, a transceiver machine, or a transceiver circuit, for realizing a transceiver function. The transceiver 1005 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 1000 may also include one or more interface circuits 1007. The interface circuits 1007 are used to receive code instructions and transmit them to the processor 1001. The processor 1001 runs the code instructions to cause the communication device 1000 to perform the method described in the method embodiments.

In a case where the communication device 1000 is a network side device, the processor 1001 performs steps S21 and S22 in FIG. 2, steps S31 and S32 in FIG. 3, steps S41 and S42 in FIG. 4, steps S51 and S52 in FIG. 5, steps S61 and S62 in FIG. 6, steps S71 and S72 in FIG. 7, steps S81 and S82 in FIG. 8, steps S91 and S92 in FIG. 9, steps S101 and S102 in FIG. 10, and steps S111 and S112 in FIG. 11.

In a case where the communication device 1000 is a terminal device, the processor 1001 performs steps S121 and S122 in FIG. 12, steps S31 and S32 in FIG. 3, steps S41 and S42 in FIG. 4, steps S51 and S52 in FIG. 5, steps S61 and S62 in FIG. 6, steps S71 and S72 in FIG. 7, steps S81 and S82 in FIG. 8, steps S91 and S92 in FIG. 9, steps S101 and S102 in FIG. 10, and steps S111 and S112 in FIG. 11.

In an implementation, the processor 1001 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1001 may store a computer program 1003. The processor 1001 runs the computer program 1003 to cause the communication device 1000 to perform the methods described in the method embodiments above. The computer program 1003 may be solidified in the processor 1001, and in such case the processor 1001 may be implemented by hardware.

In an implementation, the communication device 1000 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver are produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a terminal device, but the scope of the communication device described in the disclosure is not limited thereto, and the structure of the communication device may not be limited by FIG. 14. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

The case where the communication device is a chip or a chip system can be referred to FIG. 15. FIG. 15 is a structural diagram of a chip provided in an embodiment of the disclosure.

The chip 1100 includes a processor 1101 and an interface 1103. There may be may be one or more processors 1101, and a plurality of interfaces 1103.

If the chip is used to realize the functions of the network side device in the embodiments of the disclosure,
the interface 1103 is configured to receive code instructions and transmit the code instructions to the processor, and
the processor 1101 is configured to execute the code instructions to perform the beam determination method as described in some embodiments above.

If the chip is used to realize the functions of the terminal device in the embodiments of the disclosure,
the interface 1103 is configured to receive code instructions and transmit the code instructions to the processor, and
the processor 1101 is configured to execute the code instructions to perform the beam determination method as described in some embodiments above.

Optionally, the chip 1100 may also include a memory 1102 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The embodiments of the disclosure also provide a beam determination system. The system includes a communication device acting as a terminal device and a communication device acting as a network side device in the aforementioned embodiment of FIG. 13. Alternatively, the system includes a communication device acting as a terminal device and a communication device acting as a network side device in the aforementioned embodiment of FIG. 14.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that "first", "second", or other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A beam determination method, performed by a network side device, comprising:
in a transmission process of small data transmission (SDT), determining latest uplink transmission of a terminal device relative to downlink channel transmission; and
determining a beam used for the downlink channel transmission of the terminal device according to a synchronization signal block (SSB) associated with the latest uplink transmission.

2. The method of claim 1, wherein in the transmission process of SDT, determining the latest uplink transmission of the terminal device relative to the downlink channel transmission comprises:
in a transmission process of configured grant-SDT (CG-SDT), determining that the latest uplink transmission of the terminal device relative to the downlink channel transmission is a physical random access channel (PRACH) transmission or a physical uplink shared channel (PUSCH) transmission.

3. The method of claim 1, wherein in the transmission process of SDT, determining the latest uplink transmission of the terminal device relative to the downlink channel transmission comprises:
in a transmission process of random access-SDT (RA-SDT), determining that the latest uplink transmission of the terminal device relative to the downlink channel transmission is a PRACH transmission.

4. The method of claim 2, wherein an SSB associated with the PUSCH transmission has a quasi co-located (QCL) relationship with the downlink channel transmission, and determining the beam used for the downlink channel transmission of the terminal device according to the SSB associated with the latest uplink transmission comprises:
determining a beam used for the downlink channel transmission of the terminal device according to the SSB associated with the PUSCH transmission and the QCL relationship.

5. The method of claim 2, wherein in a case where the PUSCH transmission is configured grant-PUSCH (CG-PUSCH) transmission, and an SSB associated with the CG-PUSCH transmission has a QCL relationship with the downlink channel transmission, and determining the beam used for the downlink channel transmission of the terminal device according to the SSB associated with the latest uplink transmission comprises:
determining a beam used for the downlink channel transmission of the terminal device according to the SSB associated with the CG-PUSCH transmission and the QCL relationship.

6. The method of claim 2 or 3, wherein an SSB associated with the PRACH transmission has a QCL relationship with the downlink channel transmission, and determining the beam used for the downlink channel transmission of the terminal device according to the SSB associated with the latest uplink transmission comprises:
determining a beam used for the downlink channel transmission of the terminal device according to the SSB associated with the PRACH transmission and the QCL relationship.

7. The method of claim 2 or 3, wherein in the transmission process of SDT, the PRACH transmission is initiated, and in response to a RACH procedure being successful, an SSB associated with the PRACH transmission has a QCL relationship with a designated downlink channel transmission in the downlink channel transmission, and determining the beam used for the downlink channel transmission of the terminal device according to the SSB associated with the latest uplink transmission comprises:
determining, according to the SSB associated with the PRACH transmission and the QCL relationship, a beam used for the designated downlink channel transmission of the terminal device;
wherein the designated downlink channel transmission comprises at least one of:
physical downlink control channel (PDCCH) transmission not related to a message Msg2;
PDCCH transmission not related to a message Msg3;
PDCCH transmission not related to a message Msg4;
physical downlink shared channel (PDSCH) transmission not related to the message Msg2; or
PDSCH transmission not related to the message Msg4.

8. The method of any one of claims 1-6, wherein the downlink channel transmission is a PDCCH transmission and/or a PDSCH transmission.

9. A beam determination method, performed by a terminal device, comprising:
in a transmission process of small data transmission (SDT), determining latest uplink transmission relative to downlink channel transmission; and
determining a beam used for the downlink channel transmission of the terminal device according to a synchronization signal block (SSB) associated with the latest uplink transmission.

10. The method of claim 9, wherein in the transmission process of SDT, determining the latest uplink transmission relative to downlink channel transmission comprises:
in a transmission process of configured grant-SDT (CG-SDT), determining that the latest uplink transmission relative to the downlink channel transmission is a physical random access channel (PRACH) transmission or a physical uplink shared channel (PUSCH) transmission.

11. The method of claim 9, wherein in the transmission process of SDT, determining the latest uplink transmission relative to the downlink channel transmission comprises:
in a transmission process of random access-SDT (RA-SDT), determining that the latest uplink transmission relative to the downlink channel transmission is a PRACH transmission.

12. The method of claim 10, wherein an SSB associated with the PUSCH transmission has a quasi co-located (QCL) relationship with the downlink channel transmission, and determining the beam used for the downlink channel transmission of the terminal device according to the SSB associated with the latest uplink transmission comprises:
determining a beam used for the downlink channel transmission of the terminal device according to the SSB associated with the PUSCH transmission and the QCL relationship.

13. The method of claim 10, wherein in a case where the PUSCH transmission is configured grant-PUSCH (CG-PUSCH) transmission, and an SSB associated with the CG-PUSCH transmission has a QCL relationship with the downlink channel transmission, and determining the beam used for the downlink channel transmission of the terminal device according to the SSB associated with the latest uplink transmission comprises:
determining a beam used for the downlink channel transmission of the terminal device according to the SSB associated with the CG-PUSCH transmission and the QCL relationship.

14. The method of claim 10 or 11, wherein an SSB associated with the PRACH transmission has a QCL relationship with the downlink channel transmission, and determining the beam used for the downlink channel transmission of the terminal device according to the SSB associated with the latest uplink transmission comprises:
determining a beam used for the downlink channel transmission of the terminal device according to the SSB associated with the PRACH transmission and the QCL relationship.

15. The method of claim 10 or 11, wherein in the transmission process of SDT, the PRACH transmission is initiated, and in response to a RACH procedure being successful, an SSB associated with the PRACH transmission has a QCL relationship with a designated downlink channel transmission in the downlink channel transmission, and determining the beam used for the downlink channel transmission of the terminal device according to the SSB associated with the latest uplink transmission comprises:
determining, according to the SSB associated with the PRACH transmission and the QCL relationship, a beam used for the designated downlink channel transmission of the terminal device;
wherein the designated downlink channel transmission comprises at least one of:
physical downlink control channel (PDCCH) transmission not related to a message Msg2;
PDCCH transmission not related to a message Msg3;
PDCCH transmission not related to a message Msg4;
physical downlink shared channel (PDSCH) transmission not related to the message Msg2; or
PDSCH transmission not related to the message Msg4.

16. The method of any one of claims 9-14, wherein the downlink channel transmission is a PDCCH transmission and/or a PDSCH transmission.

17. A communication device, provided in a network side device, comprising:
a processing module, configured to, in a transmission process of small data transmission (SDT), determine latest uplink transmission of a terminal device relative to downlink channel transmission; and
the processing module, further configured to determine a beam used for the downlink channel transmission of the terminal device according to a synchronization signal block (SSB) associated with the latest uplink transmission.

18. A communication device, provided in a terminal device, comprising:
a processing module, configured to, in a transmission process of small data transmission (SDT), determine latest uplink transmission relative to downlink channel transmission; and
the processing module, further configured to determine a beam used for the downlink channel transmission of the terminal device according to a synchronization signal block (SSB) associated with the latest uplink transmission.

19. A communication device, comprising a processor and a memory having computer programs stored thereon, wherein the computer programs stored in the memory causes the device to perform the method of any one of claims 1-8 when executed by the processor, or the computer programs stored in the memory causes the device to perform the method of any one of claims 9-16 when executed by the processor.

20. A communication device, comprising a processor and an interface circuit;
wherein the interface circuit is configured to receive code instructions and transmit the code instructions to the processor; and
the processor is configured to run the code instructions to execute the method of any one of claims 1-8, or the processor is configured to run the code instructions to execute the method of any one of claims 9-16.

21. A computer-readable storage medium for storing instructions, wherein when the instructions are executed, the method of any one of claims 1-8 is implemented, or when the instructions are executed, the method of any one of claims 9-16 is implemented.
